# EUROPEAN PATENT APPLICATION

(11) **EP 1 762 394 A1**
(43) Date of publication of application: **14.03.2007**
(21) Application number: 06254447.3
(22) Date of filing: 25.08.2006
(51) Int. Cl.: B41J 29/393, B41J 2/21, H04N 1/401

(54) **Printing device, printing program, printing method and image processing device, image processing program, image processing method, and recording medium on which program is recorded**

(30) Priority: 25.08.2005 JP 2005243732; 08.06.2006 JP 2006159624
(71) Applicant: SEIKO EPSON CORPORATION, Shinjuku-ku, Tokyo 163-0811 (JP)
(72) Inventor: Kayahara, Naoki, c/o Seiko Epson Corporation, Shinjuku-ku Tokyo 163-0811 (JP); Sakai, Hiroaki, c/o Seiko Epson Corporation, Shinjuku-ku Tokyo 163-0811 (JP); Arazaki, Shinichi, c/o Seiko Epson Corporation, Shinjuku-ku Tokyo 163-0811 (JP); Takahashi, Toru, c/o Seiko Epson Corporation, Shinjuku-ku Tokyo 163-0811 (JP)
(74) Representative: Cloughley, Peter Andrew

(57) **Abstract**

A printing device includes a printing head that has a plurality of nozzles capable of printing dots with different sizes, a printing state information storage unit that stores printing state information representing a printing state of two nozzles that print two adjacent lines, an image data acquiring unit that acquires M value image data (M ≥ 3), a pixel value correcting unit that corrects a pixel value of at least one of pixels corresponding to the two nozzles that are directly concerned with the banding phenomenon caused in the M value image data (M ≥ 3) acquired by the image data acquiring unit and neighboring pixels, on the basis of the printing state information, an N-value conversion data creating unit that creates N-value conversion data by converting the image data having the pixel value corrected by the pixel value correcting unit into an N value (M > N ≥ 2), a printing data creating unit that creates printing data to which dots having sizes corresponding to the pixels are allocated on the basis of the N-value conversion data created by N-value conversion data creating unit, and a printing unit that performs printing by means of the printing head on the basis of the printing data created by the printing data creating unit.

## Description

The present invention relates to a printing device used for a facsimile device, a copy machine, and an office automation (OA) device, a program for controlling a printing device, and a method of controlling a printing device. In particular, the invention relates to a printing device suitable for a so-called inkjet type of printing process that ejects a plurality of liquid ink particles with various colors onto printing paper (recording material) to render a predetermined text or image, a printing program, a printing method, an image processing device, an image processing program, an image processing method, and a recording medium on which the program is recorded.

Hereinafter, a printing device, specifically, a printer of an inkjet type (hereinafter, referred to as "inkjet printer") will be described.

Generally, since the inkjet printer can produce a color printing material having a high quality at low cost, the inkjet printer has been widespread not only for office use but also for personal use with the spread of a personal computer or digital camera.

Such an inkjet printer generally renders a predetermined text or image on a printing medium to create a desired printing material. In detail, the printer ejects liquid ink particles in the form of dots onto a recording medium (paper) from nozzles of the printing head while a movable body referred to as a carriage, which includes an ink cartridge and a printing head that are integrally formed, reciprocates in a direction vertical to a paper feeding direction. In addition, since the carriage includes ink cartridges of four colors including black (black, yellow, magenta, and cyan) and printing heads corresponding to the four colors, the inkjet printer easily performs full-color printing in addition to monochrome printing by color mixture (further, ink cartridges of six, seven or eight colors including light cyan, light magenta, and others in addition to the above-mentioned four colors are also in practical use).

However, in the inkjet printer that performs printing by reciprocating the printing head provided on the carriage in a direction vertical to a paper feeding direction (printing direction), the printing head requires frequent reciprocating movements, e.g., several tens to a hundred or more so as to clearly perform printing corresponding to one page. Therefore, this results in a drawback of a longer printing time as compared with the other types of printing device, such as an electrophotographic laser printer such as a copy machine or the like.

On the contrary, in an inkjet printer in which a long printing head having a length corresponding to the same size (or a larger size) as a width of printing paper is provided and a carriage is not used, there is no need to move the printing head in a width direction of the printing paper. This accordingly allows printing with a single scan (single pass), and favorably leads to high-speed printing as with laser printers. What is better, this eliminates the need for a carriage with a printing head and a drive system for moving the carriage, thereby reducing the size and weight of a housing of the printer, and significantly reducing the noise. Note here that the ink jet printer of the former type is generally referred to as "multi-pass printer", and the latter type is referred to as "a line-head printer" or "a serial printer".

In the meantime, in the printing head necessary for the inkjet printer, minute nozzles, a diameter of each of which is within the range of 10 to 70 µm are disposed in one row at regular intervals or in a plurality of rows in a printing direction. As a result, an ink ejection direction of some nozzles may be incorrectly inclined or the nozzle position may be deviated from an ideal position due to a manufacturing error, so that a landing position of each of dots formed by the nozzles may deviate from an ideal position, thereby causing "a so-called ink deflection". Because the nozzles often show a wide range of variation in the ink amount, if the variation is too much, the ink amount to be ejected from the nozzle is considerably large or small compared with the ideal amount of ink.

As a result, an image part printed by such a faulty nozzle suffers a printing failure, i.e., a so-called banding (streaking) phenomenon, resultantly reducing the printing quality considerably. More in detail, when the "ink deflection" occurs, the dot-to-dot distance between dots formed by any adjacent nozzles becomes non-uniform. When such a dot-to-dot distance is longer than usual, the corresponding part suffers from white stripes (when the printing paper is white). When the dot-to-dot distance is shorter than usual, the corresponding part suffers from dark stripes. When the amount of ink coming from any of the nozzles is not ideal and is a lot, the part for the nozzle suffers from dark stripes, and when the amount of ink is little, the part suffers from white stripes.

Such a banding phenomenon is often observed in "the line head printer" in which a printing head or a printing medium is fixed (single pass printing), compared with the above-described "multi-pass printer" (serial printers) (This is because the multi-pass printer is adopting the technology of making white stripes less noticeable utilizing frequent reciprocating movements of the printing head).

For the purpose of preventing printing failures caused by "the banding phenomenon", research and development has been actively conducted from the hardware perspective, e.g., improving the technology of manufacturing the printing head, or improving the design thereof. However, from the perspective of manufacturing cost, the technology, or others, it is found difficult to provide a printing head perfectly free from the banding phenomenon.

In consideration of the above, the currently-available technology for correcting "the banding phenomenon" is adopting a so-called software technique such as printing control as described below in addition to such improvements from the hardware perspective as described above.

As an example for such a technology, JP-A-2002-19101 and JP-A-2003-136702 describe the technology as a measure against the variation of the nozzles and ink ejection failures. More in detail, parts of lower density are applied with shading correction so that any head variation is handled, and parts of higher density are provided with substitution color (for example, cyan or magenta for printing in black) so that the banding phenomenon and the variation are made less noticeable.

JP-A-2003-63043 describes the technology of generating filled-in images, (i.e., images being solidly and completely filled so as not to notice the paper) using all provided nozzles. That is, for filled-in images, any nozzles in the vicinity of pixels in charge of any ejection-faulty nozzle(s) are increased in ink amount for ejection.

JP-A-5-30361 describes the technology of preventing the banding phenomenon with a process of feeding back any variation observed to the ink amount coming from the nozzles through error diffusion so that the variation is absorbed.

JP-A-2004-58282 describes the technology of preventing the degradation of image by creating nozzle information representing ejection properties of the respective nozzles on the basis of the landing state of ink droplets ejected from the nozzles of a recording head onto a recording medium, estimating an influence of the ink droplets ejected from the nozzles on an image to be formed on the basis of an area-gradation of the image, the created nozzle information and recording data, creating correction information for correcting the ejection state of the ink droplets in the nozzles on the basis of the estimated result, and controlling the driving of nozzles on the basis of the created correction information.

The concern here is that, with the technology of reducing the banding phenomenon or the variation of nozzles using substitution colors as related arts found in JP-A-2002-19101 and JP-A-2003-136702, any processed parts are changed in hue. In consideration thereof, such technologies are not suitable for printing required to be high in image quality and printing quality as color photograph printing.

Another issue is with the technology of allocating information concerning non-emission nozzles to the right and left thereof to prevent "white stripes" in parts high in density. If this technology is applied to solve the above-described "ink deflection problem", white stripes are actually reduced but the banding phenomenon still remains unsolved in parts high in density.

The related art of JP-A-2003-63043 causes no problem with printing subjects if they are filled-in images, but cannot be used if printing subjects are of halftone. The technology of using substitution colors may serve well for thin lines and the like. However, if with an image of many colors, i.e., one color next to another, the technology also fails to solve the problem of hue change in the image.

The related art of JP-A-5-30361 may solve the banding phenomenon caused by the amount of ink ejected from the nozzles. However, according to the technology, the feedback process that is expected to be appropriately executed against the banding phenomenon caused by a positional deviation of the dot is complicated.

The related art of JP-A-2004-58282 corrects the white stripes or the dark stripes caused by the deviation of the dot formation position by removing the influence of the deviation for every nozzle that the dot formation portion is deviated from an ideal position regardless of the relationship of the dot formation position of two nozzles that print two adjacent lines. Therefore, it is difficult to correct all situations properly.

An advantage of some aspects of the invention is that it provides a novel printing device capable of resolving or reducing a banding phenomenon, a printing program, a printing method, an image processing device, an image processing program, an image processing method, and a recording medium on which the program is recorded.

### First aspect

According to a first aspect of the invention, a printing device includes a printing head that has a plurality of nozzles capable of printing dots with different sizes, a printing state information storage unit that stores printing state information representing a printing state of two nozzles that print two adjacent lines, an image data acquiring unit that acquires M value image data (M ≥ 3), a pixel value correcting unit that corrects a pixel value of at least one of pixels corresponding to the two nozzles that are directly concerned with the banding phenomenon caused in the M value image data (M ≥ 3) acquired by the image data acquiring unit and neighboring pixels, on the basis of the printing state information, an N-value conversion data creating unit that creates N-value conversion data by converting the image data having the pixel value corrected by the pixel value correcting unit into an N value (M > N ≥ 2), printing data creating unit that creates printing data to which dots having sizes corresponding to the pixels are allocated on the basis of the N-value conversion data created by N-value conversion data creating unit, and a printing unit that performs printing by means of the printing head on the basis of the printing data created by the printing data creating unit.

According to this aspect, the printing state information storage unit can store printing state information that represents a printing state of two nozzles printing two adjacent lines among a plurality of nozzles, the image data acquiring unit can acquire M value image data (M ≥ 3), and the pixel value correcting unit can correct a pixel value of at least one of pixels corresponding to the two nozzles that are directly concerned with the banding phenomenon caused in the M value image data (M ≥ 3) acquired by the image data acquiring unit and neighboring pixels, on the basis of the printing state information. The N-value conversion data creating unit can create N-value conversion data by converting the image data having the pixel value corrected by the pixel value correcting unit into an N value (M > N ≥ 2), the printing data creating unit can create printing data to which dots having sizes corresponding to the pixels are allocated on the basis of the N-value conversion data created by N-value conversion data creating unit, and the printing unit can perform printing by means of the printing head on the basis of the printing data created by the printing data creating unit.

It is possible to correct the pixel value of the pixels corresponding to the two nozzles that are directly concerned with the banding phenomenon on the basis of the information indicating the printing state of two nozzles that prints two adjacent lines. Therefore, it is possible to satisfactorily correct the pixel value. In addition, it is possible to effectively remove the deviation of the dot formation position due to the nozzle deflection and "white stripes" or "dark stripes" caused by the "banding phenomenon" due to an irregular density which results from nozzles varying ink ejection amount or to make the dark stripes and the white stripes less noticeable.

Herein, the expression "ink deflection" means a phenomenon in which, as mentioned above, unlike the mere ink ejection failures occur to some of nozzles, the nozzles have no problem for ink ejection but are partially misaligned so that the ink ejection direction is incorrectly inclined to form dots deviated from a target position. This is applicable to aspects of "printing device", "printing program", "printing method", "image processing device", "image processing program", "image processing method", and "recording medium on which the program is recorded", descriptions in the "description of exemplary embodiments", etc.

The expression "irregular density" means a phenomenon caused by variations in the amount of ink ejected from a plurality of nozzles forming a print head, for example, a phenomenon in which both a high density portion and a low density portion are formed in a printing result such as a filled-in image with a constant density. This is applicable to aspects of "printing device", "printing program", "printing method", "image processing device", "image processing program", "image processing method", and "recording medium on which the program is recorded", descriptions in the "description of exemplary embodiments", etc.

The expression "banding phenomenon" means, two types of printing failures, as mentioned above. One is a printing failure of "a white stripes (when the printing paper is white)" or "a dark stripes" that is generated along a paper feeding direction (printing direction) due to a variation in a distance between adjacent dots which results from the "ink deflection", and the other is a printing failure of "a white stripes (when the printing paper is white)" or "a dark stripes" that is generated along a paper feeding direction (printing direction) due to a density variation between adjacent dots which results from the variation in the amount of ink ejected from the nozzles such as an irregular density. This is applicable to aspects of "printing device", "printing program", "printing method", "image processing device", "image processing program", "image processing method", and "recording medium on which the program is recorded", descriptions in the "description of exemplary embodiments", etc.

Further, the expression "white stripes" denotes two types of printing failure portions. One refers to a part (region) of a printing medium whose base appears streaky in color which results from continuous occurrence of a phenomenon in which the distance between adjacent dots becomes larger than the predetermined distance due to the "ink deflection". The other refers to a part (region) to which ink is not ejected or a part (region) where the ink ejection amount is small, which is caused when the ink is not ejected from the nozzle or the ink ejection amount is smaller than an ideal amount. Further, the "dark stripes" refers a part (region) of the printing medium whose base is not visible in color or looks relatively darker or a part that an overlapping portion of a deflected dot and a normal dot appears dark streaky, which results from continuous occurrence of a phenomenon in which the distance between adjacent dots becomes smaller than the predetermined distance due to the "ink deflection". The expression "dark stripes" also denotes a part (region) that when the amount of ink ejected from the nozzles is larger than the ideal amount, the distance between adjacent dots becomes smaller than a predetermined distance so that the base of the printing medium is not visible in color, or looks relatively darker or an overlapping portion of a part of dot that is larger than a normal dot and the normal dot appears dark streaky. This is applicable to aspects of "printing device", "printing program", "printing method", "image processing device", "image processing program", "image processing method", and "recording medium on which the program is recorded", descriptions in the "description of exemplary embodiments", etc.

The information indicating the printing state of the two nozzles includes distance information of dots that are formed by the two nozzles, density information of dots that are formed by the two nozzles or other information relating dots that are formed by the two nozzles. This is applicable to aspects of "printing device", "printing program", "printing method", "image processing device", "image processing program", "image processing method", and "recording medium on which the program is recorded", descriptions in the "description of exemplary embodiments", etc.

The expression "M value (M ≥ 3)" is represented by 8 bit and 256 gray scale level, and denotes multi-valued pixel value that is concerned with the brightness or density. Further, the expression "N value (M > N ≥ 2)" refers to classifying the pixel value of M value (multi value) data into N types on the basis of any threshold value. The expression "dot size" means also that the dot is not landed, in addition to the size (area) of the dot. This is applicable to aspects of "printing device", "printing program", "printing method", "image processing device", "image processing program", "image processing method", and "recording medium on which the program is recorded", descriptions in the "description of exemplary embodiments", etc.

The expression "pixel value" includes "brightness value" and "density value". This is applicable to aspects of "printing device", "printing program", "printing method", "image processing device", "image processing program", "image processing method", and "recording medium on which the program is recorded", descriptions in the "description of exemplary embodiments", etc.

The "neighboring pixel" includes pixels corresponding to nozzles adjacent to two nozzles that are directly concerned with the banding phenomenon. For example, pixels corresponding to four nozzles of the two nozzles and another two nozzles that are adjacent to the former nozzles may be a correction target. Further, the range of the neighboring may be expanded to include, in addition to only one nozzle adjacent to the corresponding nozzles, two or more adjacent nozzles, and a nozzle interposed between adjacent nozzles. When pixels of nozzles adjacent to the two nozzles are corrected, banding phenomenon occurs between the dots. In this case, by selecting a pixel symmetric (horizontal or vertical) to the dots (no entity), and correcting the pixel, it is possible to effectively remove dark stripes and white stripes due to the banding phenomenon caused by the ink deflection phenomenon or to make the dark stripes and the white stripes less noticeable. This is applicable to aspects of "printing device", "printing program", "printing method", "image processing device", "image processing program", "image processing method", and "recording medium on which the program is recorded", descriptions in the "description of exemplary embodiments", etc.

The correcting process includes correcting a pixel value by increasing or decreasing the pre-correction pixel value, and correcting by setting a new value regardless of the pre-correction pixel value. This is applicable to aspects of "printing device", "printing program", "printing method", "image processing device", "image processing program", "image processing method", and "recording medium on which the program is recorded", descriptions in the "description of exemplary embodiments", etc.

The "image data acquiring unit" acquires image data input from an optical printed result reading unit such as a scanner, passively or actively acquires image data stored in an external apparatus via a network such as LAN or WAN, acquires image data from a recording medium such as a CD-ROM, DVD-ROM through a driving device such as a CD drive or DVD drive provided in the printing device, or acquires image data stored in a storage unit of printing device. That is, the acquiring includes at least inputting, obtaining, receiving, and reading. This is applicable to aspects of "printing device control program", "printing device control method", "printing data creating device", "printing data creating program", "printing data creating method", and "recording medium on which the program is recorded", descriptions in the "description of exemplary embodiments", etc.

The "printing state information storage unit" stores printing state information using any type of units at any time. The storage unit may store the printing state information in advance, or store the printing state information in accordance with input from externals when the printing device is activated. For example, before selling the printing device as a product, such as shipping, the deviation amount of the dot formation position of the two nozzles that configures a printing head is checked on the basis of the result printed by the printing head by using the optical printing result reading unit such as a scanner, and then the checked result can be previously stored. When using a printing device, as same when shipping, the deviation amount of the dot formation position of the two nozzles that configures a printing head is checked, and then the checked result can be stored. Therefore, the timing for storing is not limited as long as the printing state information has been already stored when using the printing device. Further, after using the printing device, in order to correspond to the case when the property of the printing head is changed, the deviation amount of the dot formation position of the two nozzles is checked on the basis of the result printed by the printing head by using the optical printing result reading unit such as a scanner regularly or at a predetermined time. And then, the printing state information can be updated such that the check result is stored along with the data when shipping, or is written over the data. That is, the acquiring includes at least inputting, obtaining, receiving, and reading. This is applicable to aspects of "printing device control program", "printing device control method", "printing data creating device", "printing data creating program", "printing data creating method", and "recording medium on which the program is recorded", descriptions in the "description of exemplary embodiments", etc.

The expression "dot" denotes a single region that ink ejected from one or a plurality of nozzles is landed on the printing medium. This "dot" is not zero in area, has a predetermined size (area), and has various sizes. The shape of the dot formed by the ejected ink is not limited to a perfect circle. For example, when the dot takes any other shape such as an ellipse, the dot diameter is determined by the average diameter. Otherwise, as to a perfect circle having the same area as a dot formed with a certain amount of ink is estimated, and the diameter of the estimated equivalent dot is dealt as the dot diameter. Further, a method of allocating the dots having different densities includes a method of ejecting dots that have the same size and different densities, a method of ejecting dots that have the same density and different sizes, a method of varying density by overlapping dots with the same density and different amount of ink ejected, etc. Furthermore, one dot refers even when one ink droplet ejected from one nozzles is divided into two parts and then landed, and two dots refers dots that are formed by two nozzles or two or more dots that are formed sequentially by one nozzle. This is applicable to aspects of "printing device", "printing program", "printing method", "image processing device", "image processing program", "image processing method", and "recording medium on which the program is recorded", descriptions in the "description of exemplary embodiments", etc.

### Second aspect

According to a second aspect of the invention, the printing device of the first aspect further includes a correction amount information storage unit that stores correction amount information of the at least one of the pixels corresponding to the two nozzles that are directly concerned with the banding phenomenon and the neighboring pixels, the correction amount information being created on the basis of the printing state information. In addition, the pixel value correction unit corrects the value of the at least one of the pixels corresponding to the two nozzles directly concerned with the banding phenomenon, and the neighboring pixels, on the basis of the correction amount information stored in the correction amount information storage unit.

According to the above aspect, the correction amount information storage unit can store correction amount information of the at least one of the pixels corresponding to the two nozzles directly concerned with the banding phenomenon, and the neighboring pixels, the correction amount information being created on the basis of the printing state information, and the pixel value correcting unit can correct the pixel value of the pixel corresponding to the two nozzles directly concerned with the banding phenomenon on the basis of the correction amount information stored in the correction amount information storage unit.

Therefore, on the basis of the printing state information of the two nozzles of the printing head for printing two adjacent lines, the pixel value of the pixel directly concerned with the banding phenomenon, that is, the pixel value of at least one of pixels corresponding to the two nozzles and the neighboring pixel can be corrected using a proper correction amount previously created by an experiment, etc. Therefore, it is possible to easily and satisfactorily correct the pixel value, and further it is possible to effectively remove dark stripes and white stripes due to the banding phenomenon or to make the dark stripes and the white stripes less noticeable.

In this case, in order to effectively remove dark stripes and white stripes due to the banding phenomenon or to make the dark stripes and the white stripes less noticeable, the correction amount includes a value increasing or decreasing the pixel value (density value, brightness value) of the pixel to be corrected, and a change value of the pixel value of the pixel to be corrected, and the correction process is performed by increasing or decreasing the pre-correction pixel value to an increased/decreased value, or changing the pre-correction pixel value into a changed value. This is applicable to aspects of "printing device", "printing program", "printing method", "image processing device", "image processing program", "image processing method", and "recording medium on which the program is recorded", descriptions in the "description of exemplary embodiments", etc.

### Third aspect

According to a third aspect of the invention, in the printing device according to the first or second aspect, the at least one of the pixels corresponding to the two nozzles that are directly concerned with the banding phenomenon and the neighboring pixels is set to be a pixel corresponding to a predetermined number of lines that are symmetrically continuous with respect to a line space between the two lines printed by the two nozzles directly concerned with the banding phenomenon.

According to the aspect, on the basis of the information indicating the printing state of the two nozzles that print the two adjacent two lines, it is possible to correct pixels corresponding to a predetermined number of the lines that are symmetrically continuous with respect to a line space between the two lines printed by the two nozzles. Such a configuration allows correction for the deviation of the dot formation position due to ink deflection of the nozzles or "white stripes" or "black stripes" caused by a banding phenomenon generated due to an irregular density which results from nozzles having a varying ink ejection amount.

The expression "line space" denotes a portion between one and the other of two lines of pixels printed by the two nozzles that print two adjacent lines. That is, the distance between the lines becomes smaller than usual (occasionally, parts of individual dots forming the two lines overlap each other) due to the ink deflection so that "dark stripes" are generated between the lines. Further, the distance between the lines becomes larger than usual due to the ink deflection so that "white stripes" are generated between the lines. This is applicable to aspects of "printing device", "printing program", "printing method", "image processing device", "image processing program", "image processing method", and "recording medium on which the program is recorded", descriptions in the "description of exemplary embodiments", etc.

The expression "a predetermined number of lines that are symmetrically continuous with respect to a line space" means two lines, four lines, six lines, ... N lines (N is an even number) that are vertically symmetrically continuous with respect to the line space when the lines are vertically continuous, and two lines, four lines, six lines, ... N line (N is an even number) that are horizontally symmetrically continuous with respect to the line space when the lines are horizontally continuous. When two lines are symmetrically continuous with respect to the line space, the two lines are printed by two target nozzles. When four lines are symmetrically continuous with respect to the line space, four lines are formed by two lines printed by two target nozzles and another two lines adjacent to the former two lines, respectively. When six lines are symmetrically continuous with respect to the line space, the six lines are formed by three adjacent lines on either side of the line space, in a vertical direction or a horizontal direction (oblique direction is also available). That is, when N lines are symmetrically continuous with respect to the line space, the N lines are formed by respectively continuous N/2 lines and N/2 lines that are symmetrical with respect to the line space in a vertical direction or a horizontal direction (oblique direction is also available). This is applicable to aspects of "printing device", "printing program", "printing method", "image processing device", "image processing program", "image processing method", and "recording medium on which the program is recorded", descriptions in the "description of exemplary embodiments", etc.

### Fourth aspect

According to a fourth aspect of the invention, in the printing device according to any one of the first to third aspects, the printing state information includes information indicating the relationship between an actual printing interval of the two nozzles and an ideal printing interval.

Such a configuration has an advantage that "white stripes" or "black stripes" caused by a banding phenomenon due to displacement of an actual printing interval of two nozzles from an ideal printing interval can be solved or reduced more effectively.

As such, "an ideal printing interval" is uniquely determined by a resolution, for example, the resolution is 720 dpi, the ideal printing interval is "25400 µm/720 dpi ≅ 35.28 µm" by using the relationship of 1 inch = 2.54 cm = 25400 µm. As a result, when the resolution is 720 dpi, the ideal printing interval is uniquely determined as about 35.28 µm. Further, the ideal printing interval is about 70.56 µm at 360 dpi, and about 141.11 µm at 180 dpi.

Further, the origin (the center) when the dots are formed at the ideal printing interval is determined with the ink landing position of a first nozzle as a reference. In this case, the central coordinate is assumed as a coordinate representing the dots.

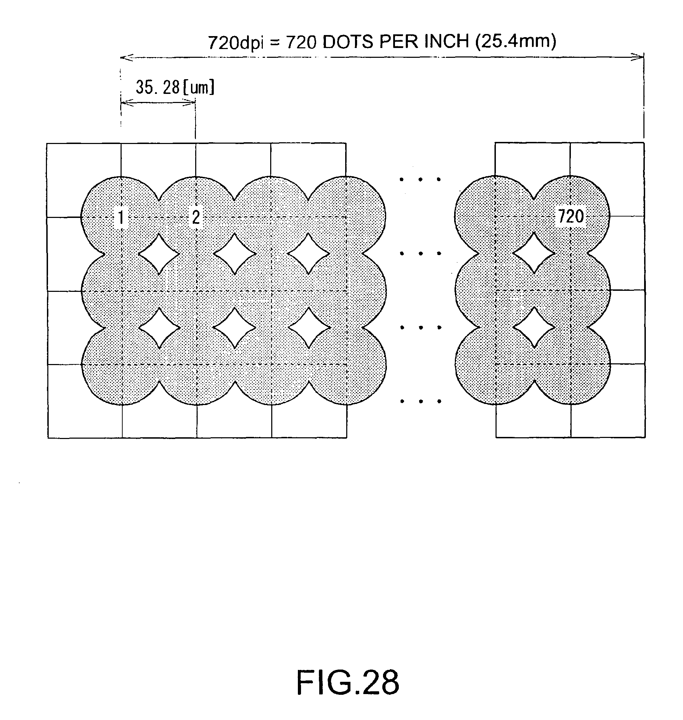

Accordingly, as shown in Fig. 28, with the central coordinate of the dot formed by the first nozzle as an origin, when the dot forming region is equally divided so that the distance between the adjacent lattice points (vertical and horizontal directions) becomes the printing interval (35.28 µm in Fig. 28) determined depending on the resolution, the state that the center of the dot is landed (formed) at the lattice point denotes the state that the dots are formed at an ideal printing interval.

### Fifth aspect

According to a fifth aspect of the invention, in the printing device according to any one of the first to third aspects, the printing state information includes information indicating densities of dots formed by the two nozzles.

Such a configuration has an advantage that "white stripes" or "black stripes" caused by a banding phenomenon due to ink ejection failures or the like of a nozzle such as an irregular density of dots formed by two nozzles can be solved or made substantially unnoticeable more effectively.

### Sixth aspect

According to a sixth aspect of the invention, in the printing device according to any one of the first to fifth aspects, the correction amount information is a data table that is capable of acquiring the correction amount of the at least one of the pixels and the neighboring pixels from the printing state information corresponding to the two nozzles and the pixel values of the pixels corresponding to the two nozzles.

According to the sixth aspect, by inputting the printing state information corresponding to the two nozzles and the pixel value of the pixels corresponding to the two nozzles, it is possible to easily obtain the correction amount of at least one of the pixels corresponding to the two nozzles and the neighboring pixels from the data table. Even when the correction amount of the input printing state information and the pixel value is not registered in the data table, the correction amount that is not registered in the data table is easily compensated by using the registered correction amount information. Therefore, it is possible to easily and satisfactorily correct the pixel value of the pixel directly concerned with the banding phenomenon, and it is further possible to effectively remove dark stripes and white stripes due to the banding phenomenon or to make the dark stripes and the white stripes less noticeable.

### Seventh aspect

According to a seventh aspect of the invention, in the printing device according to any one of the first to fifth aspects, the correction amount information is information of a function that is capable of acquiring a correction amount of the at least one of the pixels and the neighboring pixels from the printing state information corresponding to the two nozzles and the pixel value of the pixels corresponding to the two nozzles.

According to the seventh aspect, the correction amount of the at least one of the pixels corresponding to the two nozzles and the neighboring pixel can be obtained easily from the printing state information of the two nozzles and the pixel value of the pixels corresponding to the two nozzles by calculating by using the function. Therefore, it is possible to easily and satisfactorily correct the pixel value of the pixels directly concerned with the banding phenomenon, and to more effectively remove dark stripes and white stripes due to the banding phenomenon or to make the dark stripes and the white stripes less noticeable. Further, the correction amount can be obtained by performing calculation with the function information. Therefore, the data amount is smaller than the data table.

### Eighth aspect

According to an eighth aspect of the invention, in the printing method according to the sixth aspect or the ninth aspect, the pixel value of the pixel is determined on the basis of the pixel value of the corresponding pixel and the pixel values of neighboring pixels.

According to the above aspect, for example, when white pixels are arranged around one black pixel, an area composed of the white pixels and the black pixel appears to be white. However, the pixel value of each pixel is determined considering the pixel values of neighboring pixels, on the basis of the pixel value of a predetermined number of neighboring pixels, in such a manner that the average of the pixel value of each pixel and the pixel values of neighboring pixels is used as the pixel value of each pixel or the sum of values obtained by multiplying the pixel value of each pixel and the pixel values of neighboring pixels by a predetermined coefficient is used as the pixel value of each pixel. Therefore, it is possible to appropriately acquire a correction amount. In addition, it is possible to appropriately correct the pixel value of a pixel that is directly concerned with the banding phenomenon, and to effectively remove dark stripes and white stripes due to the banding phenomenon or to make the dark stripes and the white stripes less noticeable.

### Ninth aspect

According to a ninth aspect of the invention, in the printing device according to any one of the first to eighth aspects, each set of two nozzles is composed of a continuous series of two nozzles, and the pixel value correcting unit is configured such that, for each two sets of the nozzles including the common nozzle among the respective two nozzles concerned with the banding phenomenon, at least one of a pixel corresponding to the common nozzle and the neighboring pixels is corrected based on the correction amount corresponding to the two nozzles of the two sets of the nozzles.

According to the above aspect, it is possible to determine the sum (offset value) or the average of the correction amounts as the final correction amount of at least one of the pixel corresponding to the common nozzle and the neighboring pixels, on the basis of the correction amount corresponding to two sets of two nozzles including the common nozzle. In this way, it is possible to appropriately correct at least one of a corresponding pixel and neighboring pixels, which makes it possible to effectively remove dark stripes and white stripes due to the banding phenomenon or to make the dark stripes and the white stripes less noticeable.

### Tenth aspect

According to the printing device according to a tenth aspect, the N-value conversion data creating unit may convert the image data having a pixel value corrected by the pixel value correcting unit into an N-value by using an error diffusion method or a dithering method.

According to this configuration, when N-value converting, by using the error diffusion method which is one of known halftone methods, errors generated in the N-value conversion are distributed into neighboring pixels according to a predetermined error diffusion matrix. Therefore, in the sequential process, it is possible to minimize the errors as a whole by taking the influence into consideration. As a result, it is further possible to obtain a high quality printing material in which the halftone is reliably represented.

Further, by using the dithering method that is one of known halftone methods like the error diffusion method, the N-value conversion is exactly performed. Therefore, it is similarly possible to obtain a high quality printing material in which the halftone is reliably represented.

The "error diffusion method" is a well-known technique that is widely used in an image processing field, and distributes errors generated in the binary conversion into neighboring pixels according to a predetermined error diffusion matrix to minimize the errors as a whole by taking the influence into consideration in the sequential processes. That is, when performing binarization that N = 2, if the density value of the pixel is larger than an intermediate value that is half the gray scale number of the image, the pixel is classified as black (dot formation), and if the value is smaller than that, the pixel is classified as white (no dot formation). Thereafter, the error between the density values before and after classifying is distributed into the neighboring pixels with a proper proportion. This is applicable to aspects of "printing device", "printing program", "printing method", "image processing device", "image processing program", "image processing method", and "recording medium on which the program is recorded", descriptions in the "description of exemplary embodiments", etc.

The "dithering method" is a well-known technique, and is a method that compares a density value of pixels of a grayscale image and a value corresponding to a pixel in a previously prepared dithering matrix table, and the binarization that N = 2 is performed. When the value of the grayscale image is larger than the value of the pixel in the dithering matrix table, the pixel is determined as black (dot formation), and otherwise, the pixel is determined as white (no dot formation). As a result, the pixels are classified into "dot formation" and "no dot formation".

### Eleventh aspect

According to a eleventh aspect, in the printing head of the printing device of any one of the first to tenth aspects, the nozzles are continuously arranged in a wider range than the printing medium loading area to print by only one scanning.

Therefore, as mentioned above, it is possible to effectively remove dark stripes and white stripes due to the banding phenomenon that is generally generated when using a line head type printing head in which the printing is finished with one pass or to make the dark stripes and the white stripes less noticeable.

### Twelfth aspect

According to a twelfth aspect, in the printing device according to any one of the first to tenth aspects, the printing head reciprocates in a direction perpendicular to a feeding direction of the printing medium to perform printing.

The above-described banding phenomenon is generated even in the multi-pass printing head, however the banding phenomenon is significant in the line head type printing head. Further, the banding phenomenon may occurr in connections between the printing heads. Therefore, when the printing device according to the first to tenth aspects is applied to the multi-pass printing head, an appropriate process can be performed on two nozzles that form the connection between the printing heads to effectively remove dark stripes and white stripes due to the banding phenomenon generated in the multi-pass printing head or to make the dark stripes and the white stripes less noticeable.

Furthermore, in the case of the multi-pass printing head, even though the banding phenomenon can be prevented, for example, by repeatedly scanning the printing head, when applying the printing device according to the first to tenth aspect, it is not necessary to repeatedly scan the printing head on the same portion, which realizes high speed printing.

### Thirteenth aspect

A printing program according to a thirteenth aspect allows a computer to function as: an image data acquiring unit that acquires M value image data (M ≥ 3), a pixel value correcting unit that corrects a pixel value of at least one of pixels corresponding to the two nozzles that are directly concerned with the banding phenomenon caused in the M value image data (M ≥ 3) acquired by the image data acquiring unit and neighboring pixels, on the basis of the printing state information indicating the printing state of two nozzles printing two adjacent lines among a plurality of nozzles included in a printing head, an N-value conversion data creating unit that creates N-value conversion data by converting the image data having the pixel value corrected by the pixel value correcting unit into an N value (M > N ≥ 2), an image data creating unit that creates printing data to which dots having sizes corresponding to the pixels are allocated on the basis of the N-value conversion data created by N-value conversion data creating unit, and a printing unit that performs printing by means of the printing head on the basis of the printing data created by the printing data creating unit.

Therefore, similar to the first aspect, it is possible to correct the pixel value of at least one of the pixels corresponding to the two nozzles that are directly concerned with the banding phenomenon and the neighboring pixels, on the basis of the information indicating the printing state of two nozzles that print two adjacent lines. Therefore, it is possible to appropriately correct the pixel value. In addition, it is possible to effectively remove deviation of the dot formation position due to the ink deflection of the nozzle and "white stripes" or "dark stripes" caused by the banding phenomenon due to an irregular density which results from nozzles varying ink ejection amount and to make the white stripes or dark stripes less noticeable.

Printing devices on the current market such as inkjet printers are each provided with a computer system which includes a central processing unit (CPU), a storage device (RAM, ROM), an input/output device, etc. Using such a computer system, the processes can be implemented by software. The printing device control program thus can implement the processes more economically and with greater ease than a case with hardware that is specifically built for this purpose. Further, it is possible to perform upgrade through a function change or functional modification by changing a part of the program.

### Fourteenth aspect

According to a fourteenth aspect, in the printing program according to the thirteenth aspect, the pixel value correcting unit can correct the pixel value of at least one of the pixels corresponding to the two nozzles directly concerned with the banding phenomenon and the neighboring pixels, on the basis of the correction amount information of the at least one of pixels corresponding to the two nozzles directly concerned with the banding phenomenon and the neighboring pixels, that is created on the basis of the printing state information.

Therefore, similar to the second aspect, on the basis of the printing state information of the two nozzles of the printing head for printing two adjacent lines, the pixel value of at least one of the pixels corresponding to the two nozzles directly concerned with the banding phenomenon and the neighboring pixels, that is, the pixel value of at least one of pixels corresponding to the two nozzles and the neighboring pixel can be corrected using a proper correction amount previously created by an experiment, etc. Therefore, it is possible to easily and satisfactorily correct the pixel value, and further it is possible to effectively remove dark stripes and white stripes due to the banding phenomenon or to make the dark stripes and the white stripes less noticeable.

### Fifteenth aspect

According to a printing program of a fifteenth aspect, in the printing program of the thirteenth or fourteenth aspect, the at least one of the pixels corresponding to the two nozzles that are directly concerned with the banding phenomenon and the neighboring pixels is set to be a pixel corresponding to a predetermined number of lines that are symmetrically continuous with respect to a line space between the two lines printed by the two nozzles directly concerned with the banding phenomenon.

Therefore, similar to the third aspect, it is possible to correct pixels corresponding to a predetermined number of lines that are symmetrically continuous with respect to a line space between two lines printed by two nozzles, on the basis of information indicating the printing state of two nozzles printing two adjacent lines. Therefore, the pixel values can be appropriately corrected. Such a configuration allows correction of the deviation of the dot formation position due to ink deflection of the nozzle or the "white stripes" or "black stripes" caused by a banding phenomenon generated due to an irregular density which results from nozzles having a varying ink ejection amount.

### Sixteenth aspect

According to a sixteenth aspect of the invention, in the printing program according to any one of thirteenth to fifteenth aspects, the printing state information includes information indicating the relationship between an actual printing interval of the two nozzles and an ideal printing interval.

Therefore, similar to the fourth aspect, it is possible to effectively remove "dark stripes" and "white stripes" due to the banding phenomenon caused by the deviation between the actual printing interval of the two nozzles and the ideal printing interval or to make the dark stripes and the white stripes less noticeable.

### Seventeenth aspect

According to a printing program of a seventeenth aspect, in the printing program of the thirteenth to sixteenth aspects, the printing state information includes information indicating densities of dots formed by the two nozzles.

Therefore, similar to the fifth aspect, it is possible to attain an advantage that "white stripes" or "dark stripes" occurring due to the banding phenomenon caused by a defect in the discharge of ink, such as density irregularity of dots formed by two nozzles, can be effectively removed or made less noticeable.

### Eighteenth aspect

According to an eighteenth aspect of the invention, in the printing program according to any one of the thirteenth to fourteenth aspects, the correction amount information is a data table capable of acquiring, from the printing state information corresponding to the two nozzles and the pixel values of the pixels corresponding to the two nozzles, the correction amount of at least one of the pixels and the neighboring pixels.

In this way, similar to the sixth aspect, it is possible to easily acquire the correction amount corresponding to at least one of the pixels corresponding to the two nozzles and the neighboring pixels from the data table by inputting the printing state information corresponding to the two nozzles and the pixel values of the pixels corresponding to the two nozzles. In addition, even when the input printing state information and correction amounts corresponding to the pixel values are not registered in the data table, it is possible to easily calculate correction amounts not registered in the data table on the basis of the registered correction amount information by means of interpolation. Therefore, it is possible to appropriately and easily correct the pixel values of the pixels that are directly concerned with the banding phenomenon, and to attain an advantage that "white stripes" or "dark stripes" which are caused by the banding phenomenon are effectively removed or made less noticeable.

### Nineteenth aspect

According to a nineteenth aspect of the invention, in the printing program according to any one of the thirteenth to seventeenth aspects, the correction amount information is information of a function capable of acquiring the correction amounts of at least one of the pixels corresponding to the two nozzles and the neighboring pixels from the printing state information corresponding to the two nozzles and the pixel values of the pixels corresponding to the two nozzles.

In this way, similar to the seventh aspect, it is possible to easily acquire the correction amounts of at least one of the pixels corresponding to two nozzles and the neighboring pixels from the printing state information corresponding to the two nozzles and the pixel values of the pixels corresponding to the two nozzles, by calculation using the function. Therefore, it is possible to appropriately and easily correct the pixel values of the pixels that are directly concerned with the banding phenomenon, and to attain an advantage that "white stripes" or "dark stripes" which are caused by the banding phenomenon can be effectively removed or made less noticeable.

### Twentieth aspect

According to a twentieth aspect of the invention, in the printing program according to the eighteenth to nineteenth aspects, the pixel value of each pixel is determined on the basis of the pixel value of the pixel and the pixel values of neighboring pixels.

In this way, similar to the eighth aspect, when white pixels are arranged around one black pixel, an area composed of the white pixels and the black pixel appears to be white. However, the pixel value of each pixel is determined considering the pixel values of the neighboring pixels, on the basis of the pixel value of a predetermined number of neighboring pixels, in such a manner that the average of the pixel value of each pixel and the pixel values of neighboring pixels is used as the pixel value of each pixel or the sum of values obtained by multiplying the pixel value of each pixel and the pixel values of neighboring pixels by a predetermined coefficient is used as the pixel value of each pixel. Therefore, it is possible to appropriately acquire a correction amount. In addition, it is possible to appropriately correct the pixel values of the pixels that are directly concerned with the banding phenomenon, and to attain an advantage that the "dark stripes" and the "white stripes" caused by the banding phenomenon are effectively removed or made less noticeable.

### Twenty-first aspect

According to a twenty-first aspect of the invention, in the printing program according to any one of the thirteenth to twentieth aspects, each set of two nozzles is composed of a continuous series of two nozzles. In addition, one of two nozzles directly concerned with the banding phenomenon is common to two sets of nozzles, and the pixel value correcting unit corrects at least one of a pixel corresponding to the common nozzle and neighboring pixels, on the basis of the correction amounts corresponding to the two sets of two nozzles.

In this way, similar to the ninth aspect, it is possible to determine the sum (offset value) or the average of the correction amounts as the final correction amount of at least one of the pixel corresponding to the common nozzle and the neighboring pixels, on the basis of the correction amount corresponding to two sets of two nozzles including the common nozzle. Thus, it is possible to appropriately correct at least one of a corresponding pixel and neighboring pixels, which makes it possible to attain an advantage that the "dark stripes" and the "white stripes" caused by the banding phenomenon are effectively removed or made less noticeable.

### Twenty-second aspect

According to a twenty-second aspect of the invention, in the printing program according to any one of the thirteenth to twenty-first aspects, the N-value conversion data creating unit converts the image data having the pixel values corrected by the pixel value correcting unit into an N value by using an error diffusion method or a dither method.

According to this configuration, similar to the tenth aspect, when N-value converting, by using the error diffusion method which is one of known halftone methods, errors generated in the N-value conversion are distributed into neighboring pixels according to a predetermined error diffusion matrix. Therefore, in the sequential process, it is possible to minimize the errors as a whole by taking the influence into consideration. In this way, it is further possible to obtain a high quality printing material in which the halftone is reliably represented.

Further, by using the dithering method that is one of known halftone methods like the error diffusion method, the N-value conversion is exactly performed. Therefore, it is similarly possible to obtain a high quality printing material in which the halftone is reliably represented.

### Twenty-third aspect

According to a twenty-third aspect of the invention, a computer readable recording medium has the printing program according to any one of the thirteenth to twenty-second aspects recorded therein.

In this way, it is possible to easily and reliably provide the image processing program according to any one of the thirteenth to twenty-second aspects to consumers, such as users, through a computer readable recoding medium, such as a CD-ROM, a DVD-ROM, an FD, or a semiconductor chip.

### Twenty-fourth aspect

According to a twenty-fourth aspect of the invention, a printing method includes: acquiring M-value image data (M ≥ 3); correcting at least one of pixel values of pixels corresponding to two nozzles directly concerned with a banding phenomenon in the M-value image data (M ≥ 3) and pixel values of neighboring pixels acquired in the acquiring of the image data, on the basis of printing state information indicating the printing state of two nozzles printing two adjacent lines among a plurality of nozzles included in a printing head, the plurality of nozzles being capable of printing dots having different sizes; creating N-value conversion data by converting the image data having the pixel values corrected in the correcting of the pixel values into an N value (M > N ≥ 2); and creating printing data to which dots having sizes corresponding to each pixel are allocated, on the basis of the N-value conversion data created in the creating of the N-value conversion data.

In this way, similar to the first aspect, it is possible to correct at least one of the pixel values of the pixels corresponding to the two nozzles that are directly concerned with the banding phenomenon and the pixel values of the neighboring pixels, on the basis of information indicating the printing state of two nozzles that print two adjacent lines. Therefore, it is possible to appropriately correct the pixel values. In addition, it is possible to attain an advantage that the "white stripes" or the "dark stripes" which are caused by the banding phenomenon occurring due to density irregularity which results from a variation in the amount of ink discharged or due to the deviation of a dot forming position that results from the ink deflection nozzles can be effectively removed or be less noticeable.

### Twenty-fifth aspect

According to a twenty-fifth aspect of the invention, in the printing method according to the twenty-fourth aspect, in the correcting of the pixel values, the pixel value of at least one of the pixels corresponding to the two nozzles that are directly concerned with the banding phenomenon and the neighboring pixels is corrected on the basis of correction amount information of at least one of the pixels corresponding to the two nozzles that are directly concerned with the banding phenomenon and the neighboring pixels, and the correction amount information is created on the basis of the printing state information.

In this way, similar to the second aspect, it is possible to correct at least one of the pixel values of the pixels corresponding to two nozzles that are directly concerned with the banding phenomenon and the pixel values of the neighboring pixels by using an appropriate correction amount that is previously created by, for example, experiments, on the basis of the printing state information of two nozzles of the printing head that print two adjacent lines. Therefore, it is possible to appropriately and easily correct the pixel values. In addition, it is possible to attain an advantage that "white stripes" or "dark stripes" which are caused by the banding phenomenon can be effectively removed or be less noticeable.

### Twenty-sixth aspect

According to a twenty-sixth aspect, in the printing method according to the twenty-fourth or twenty-fifth aspect, at least one of the pixels corresponding to the two nozzles that are directly concerned with the banding phenomenon and the neighboring pixels is set as pixels corresponding to a predetermined number of lines that are symmetrically continuous with respect to a line space between two lines printed by the two nozzles that are directly concerned with the banding phenomenon.

In this way, similar to the third aspect, it is possible to correct pixels corresponding to a predetermined number of lines that are symmetrically continuous with respect to a line space between two lines printed by two nozzles, on the basis of information of the printing state of two nozzles printing two adjacent lines. Therefore, the pixel values can be appropriately corrected. In addition, it is possible to attain an advantage that "white stripes" or "dark stripes" which are caused by the banding phenomenon occurring due to irregular density which results from a variation in the amount of ink discharged or due to the deviation of a dot forming position that results from the ink deflection discharged from nozzles can be effectively removed or be less noticeable.

### Twenty-seventh aspect

According to a twenty-seventh aspect of the invention, in the printing method according to any one of the twenty-fourth to twenty-sixth aspects, the printing state information includes information indicating the relationship between an actual printing interval of the two nozzles and an ideal printing interval thereof.

In this way, similar to the fourth aspect, it is possible to attain an advantage that "white stripes" or "dark stripes" occurring due to the banding phenomenon caused by the deviation between the actual printing interval of two nozzles and the ideal printing interval can be effectively removed or be less noticeable.

### Twenty-eighth aspect

According to a twenty-eighth aspect of the invention, in the printing method according to any one of the twenty-fourth to twenty-seventh aspects, the printing state information includes information related to the densities of dots formed by the two nozzles.

In this way, similar to the fifth aspect, for example, it is possible to attain an advantage that "white stripes" or "dark stripes" occurring due to the banding phenomenon caused by a defect in the discharge of ink, such as density irregularity of dots formed by two nozzles, can be effectively removed or be less noticeable.

### Twenty-ninth aspect

According to a twenty-ninth aspect of the invention, in the printing method according to any one of the twenty-fourth to twenty-eighth aspects, the correction amount information is a data table capable of acquiring the correction amount of at least one of the pixels and the neighboring pixels from the printing state information corresponding to the two nozzles and the pixel values of the pixels corresponding to the two nozzles.

In this way, similar to the sixth aspect, it is possible to easily acquire the correction amount corresponding to at least one of the pixels corresponding to the two nozzles and the neighboring pixels from the data table by inputting the printing state information corresponding to the two nozzles and the pixel values of the pixels corresponding to the two nozzles. In addition, even when the input printing state information and correction amounts corresponding to the pixel values are not registered in the data table, it is possible to easily calculate correction amounts not registered in the data table on the basis of the registered correction amount information by means of interpolation. Therefore, it is possible to appropriately and easily correct the pixel values of the pixels that are directly concerned with the banding phenomenon, and to attain an advantage that "white stripes" or "dark stripes" which are caused by the banding phenomenon can be effectively removed or be less noticeable.

### Thirtieth aspect

According to a thirtieth aspect of the invention, in the printing method according to any one of the twenty-fourth to twenty-eighth aspects, the correction amount information is information of a function capable of acquiring the correction amounts of at least one of the pixels corresponding to the two nozzles and the neighboring pixels from the printing state information corresponding to the two nozzles and the pixel values of the pixels corresponding to the two nozzles.

In this way, similar to the seventh aspect, it is possible to easily acquire the correction amounts of at least one of the pixels corresponding to two nozzles and neighboring pixels from the printing state information corresponding to the two nozzles and the pixel values of the pixels corresponding to the two nozzles, by calculation using the function. Therefore, it is possible to appropriately and easily correct the pixel values of the pixels that are directly concerned with the banding phenomenon, and to attain an advantage that "white stripes" or "dark stripes" which are caused by the banding phenomenon can be effectively removed or be less noticeable.

### Thirty-first aspect

According to a thirty-first aspect of the invention, in the printing method according to the twenty-ninth aspect or the thirtieth aspect, the pixel value of each pixel is determined on the basis of the pixel value of a corresponding pixel and the pixel values of neighboring pixels.

In this way, similar to the eighth aspect, for example, when white pixels are arranged around one black pixel, an area composed of the white pixels and the black pixel appears to be white. However, the pixel value of each pixel is determined considering the pixel values of neighboring pixels, on the basis of the pixel value of a predetermined number of neighboring pixels, in such a manner that the average of the pixel value of each pixel and the pixel values of neighboring pixels is used as the pixel value of each pixel or the sum of values obtained by multiplying the pixel value of each pixel and the pixel values of neighboring pixels by a predetermined coefficient is used as the pixel value of each pixel. Therefore, it is possible to appropriately acquire a correction amount. In addition, it is possible to appropriately correct the pixel value of a pixel that is directly concerned with the banding phenomenon, and to effectively remove the dark stripes and the white stripes due to the banding phenomenon or to make the dark stripes and the white stripes less noticeable.

### Thirty-second aspect

According to a thirty-second aspect of the invention, in the printing method according to any one of the twenty-fourth to thirty-first aspects, each set of two nozzles is composed of a continuous series of two nozzles. In addition, in correcting of the pixel values, one of two nozzles directly concerned with the banding phenomenon is common to two sets of nozzles, and at least one of a pixel corresponding to the common nozzle and neighboring pixels is corrected on the basis of the correction amount corresponding to the two sets of two nozzles.

According to this aspect, similar to the ninth aspect, it is possible to determine the sum (offset value) or the average of the correction amounts as the final correction amount of at least one of the pixels corresponding to the common nozzle and the neighboring pixels, on the basis of the correction amount corresponding to two sets of two nozzles including the common nozzle. In this way, it is possible to appropriately correct at least one of a corresponding pixel and neighboring pixels, which makes it possible to effectively remove the "dark stripes" and the "white stripes" due to the banding phenomenon or to make the dark stripes and the white stripes less noticeable.

### Thirty-third aspect

According to a thirty-third aspect of the invention, in the printing method according to any one of the twenty-fourth to thirty-second aspects, in the creating of the N-value conversion data, image data having the pixel values corrected in the correcting of the pixel values is converted into an N value by an error diffusion method or a dither method.

In this way, similar to the ninth aspect, it is possible to reliably obtain a high-quality printed matter substantially representing the intermediate grayscale level of the original image data.

### Thirty-fourth aspect

According to a thirty-fourth aspect of the invention, an image processing device includes: a printing state information storage unit that stores printing state information indicating the printing state of two nozzles for printing two adjacent lines, among a plurality of nozzles of a printing head, the plurality of nozzles being capable of printing dots having different sizes; an image data acquiring unit that acquires M-value image data (M ≥ 3); a pixel value correcting unit that corrects at least one of the pixel values of pixels corresponding to the two nozzles directly concerned with a banding phenomenon in the M-value image data (M ≥ 3) and the pixel values of neighboring pixels acquired by the image data acquiring unit, on the basis of the printing state information; an N-value conversion data creating unit that creates N-value conversion data by converting the image data having the pixel values corrected by the pixel value correcting unit into an N value (M > N ≥ 2); and a printing data creating unit that creates printing data to which a dot having a size corresponding to each pixel is allocated, on the basis of the N-value conversion data created by the N-value conversion data creating unit.

According to this aspect, the printing state information storage unit can store printing state information that represents the printing state of two nozzles printing two adjacent lines among a plurality of nozzles, and the image data acquiring unit can acquire M-value image data (M ≥ 3). The pixel value correcting unit can correct the value of at least one of pixels corresponding to the two nozzles that are directly concerned with the banding phenomenon in the M-value image data (M ≥ 3) acquired by the image data acquiring unit and neighboring pixels, on the basis of the printing state information. The N-value conversion data creating unit can create N-value conversion data by converting the image data having the pixel value corrected by the pixel value correcting unit into an N value (M > N ≥ 2), and the printing data creating unit can create printing data to which dots having sizes corresponding to the pixels are allocated, on the basis of the N-value conversion data created by N-value conversion data creating unit.

Accordingly, it is possible to correct at least one of the pixel values of the pixels corresponding to the two nozzles that are directly concerned with the banding phenomenon and the pixel values of neighboring pixels, on the basis of information indicating the printing state of two nozzles that print two adjacent lines. Therefore, it is possible to appropriately correct the pixel values. In addition, it is possible to obtain printing data enabling "white stripes" or "dark stripes" caused by the banding phenomenon due to irregular density which results from a variation in the amount of ink discharged or due to the deviation of a dot forming position that results from the ink deflection discharged from nozzles to be effectively removed or to be less noticeable.

Further, since the above-mentioned units can be realized on software, an information processing apparatus, such as a general-purpose personal computer, can serve as the above-mentioned units.

### Thirty-fifth aspect

According to a thirty-fifth aspect of the invention, the image processing device according to the thirty-fourth aspect further includes a correction amount information storage unit that stores correction amount information of at least one of the pixels corresponding to the two nozzles that are directly concerned with the banding phenomenon and the neighboring pixels, and the correction amount information is created on the basis of the printing state information. The pixel value correcting unit corrects the pixel value of at least one of the pixels corresponding to the two nozzles that are directly concerned with the banding phenomenon and the neighboring pixels, on the basis of the correction amount information stored in the correction amount information storage unit.

According to this structure, the correction amount information storage unit can store correction amount information of at least one of the pixels corresponding to the two nozzles that are directly concerned with the banding phenomenon and the neighboring pixels, and the correction amount information is created on the basis of the printing state information. The pixel value correcting unit can correct the pixel values of the pixels corresponding to the two nozzles that are directly concerned with the banding phenomenon, on the basis of the correction amount information stored in the correction amount information storage unit.

Accordingly, it is possible to correct at least one of the pixel values of pixels corresponding to two nozzles that are directly concerned with the banding phenomenon and the pixel values of neighboring pixels that is, the pixel values of at least one of the pixels corresponding to the two nozzles and the neighboring pixels by using an appropriate correction amount previously created by, for example, experiments, on the basis of the printing state information of two nozzles of the printing head that print two adjacent lines. Therefore, it is possible to appropriately and easily correct the pixel values. In addition, it is possible to obtain printing data enabling "white stripes" or "dark stripes" caused by the banding phenomenon to be effectively removed or to be less noticeable.

### Thirty-sixth aspect

According to a thirty-sixth aspect, in the image processing device according to the thirty-fourth aspect or the thirty-fifty aspect, at least one of the pixels corresponding to the two nozzles that are directly concerned with the banding phenomenon and the neighboring pixels is set as pixels corresponding to a predetermined number of lines that are symmetrically continuous with respect to a line space between two lines printed by the two nozzles that are directly concerned with the banding phenomenon.

According to this structure, it is possible to correct pixels corresponding to a predetermined number of lines that are symmetrically continuous with respect to a line space between two lines printed by two nozzles, on the basis of information indicating the printing state of two nozzles printing two adjacent lines. Therefore, the pixel values can be appropriately corrected. In addition, it is possible to obtain printing data enabling "white stripes" or "dark stripes" caused by the banding phenomenon due to irregular density which results from a variation in the amount of ink discharged or due to the deviation of a dot forming position that results from the ink deflection discharged from nozzles to be effectively removed or to be less noticeable.

### Thirty-seventh aspect

According to a thirty-seventh aspect of the invention, in the image processing device according to any one of the thirty-fourth to thirty-sixth aspects, the printing state information includes information indicating the relationship between an actual printing interval of the two nozzles and an ideal printing interval thereof.

According to this structure, it is possible to obtain printing data enabling "white stripes" or "dark stripes" occurring due to the banding phenomenon caused by the deviation between the actual printing interval of two nozzles and the ideal printing interval to be effectively removed or to be less noticeable.

### Thirty-eighth aspect

According to a thirty-eighth aspect of the invention, in the image processing device according to any one of the thirty-fourth to thirty-seventh aspects, the printing state information includes information related to the densities of dots formed by the two nozzles.

According to this structure, for example, it is possible to obtain printing data enabling "white stripes" or "dark stripes" occurring due to the banding phenomenon caused by a defect in the discharge of ink, such as density irregularity of dots formed by two nozzles, to be effectively removed or to be less noticeable.

### Thirty-ninth aspect

According to a thirty-ninth aspect of the invention, in the image processing device according to any one of the thirty-fourth to thirty-eighth aspects, the correction amount information is a data table capable of acquiring, from the printing state information corresponding to the two nozzles and the pixel values of the pixels corresponding to the two nozzles, the correction amount of at least one of the pixels and the neighboring pixels.

According to this structure, it is possible to easily acquire the correction amount corresponding to at least one of the pixels corresponding to the two nozzles and the neighboring pixels from the data table by inputting the printing state information corresponding to the two nozzles and the pixel values of the pixels corresponding to the two nozzles. In addition, even when the input printing state information and correction amounts corresponding to the pixel values are not registered in the data table, it is possible to easily calculate correction amounts not registered in the data table on the basis of the registered correction amount information by means of interpolation. Therefore, it is possible to appropriately and easily correct the pixel values of the pixels that are directly concerned with the banding phenomenon, and to obtain printing data enabling "white stripes" or "dark stripes" caused by the banding phenomenon to be effectively removed or to be less noticeable.

### Fortieth aspect

According to a fortieth aspect of the invention, in the image processing device according to any one of the thirty-fourth to thirty-eighth aspects, the correction amount information is information of a function capable of acquiring the correction amounts of at least one of the pixels corresponding to the two nozzles and the neighboring pixels from the printing state information corresponding to the two nozzles and the pixel values of the pixels corresponding to the two nozzles.

According to this structure, it is possible to easily acquire the correction amounts of at least one of the pixels corresponding to two nozzles and neighboring pixels from the printing state information corresponding to the two nozzles and the pixel values of the pixels corresponding to the two nozzles, by calculation using the function. Therefore, it is possible to appropriately and easily correct the pixel values of the pixels that are directly concerned with the banding phenomenon, and to obtain printing data enabling "white stripes" or "dark stripes" caused by the banding phenomenon to be effectively removed or to be less noticeable. Since the correction amount is obtained by calculation on the basis of the information of the function, it is possible to further reduce the amount of data in the data table.

### Forty-first aspect

According to a forty-first aspect of the invention, in the image processing device according to the thirty-ninth or the fortieth aspect, the pixel value of each pixel is determined on the basis of the pixel value of the pixel and the pixel values of neighboring pixels.

According to this structure, when white pixels are arranged around one black pixel, an area composed of the white pixels and the black pixel appears to be white. However, the pixel value of each pixel is determined considering the pixel values of neighboring pixels, on the basis of the pixel value of a predetermined number of neighboring pixels, in such a manner that the average of the pixel value of each pixel and the pixel values of neighboring pixels is used as the pixel value of each pixel or the sum of values obtained by multiplying the pixel value of each pixel and the pixel values of neighboring pixels by a predetermined coefficient is used as the pixel value of each pixel. Therefore, it is possible to appropriately acquire a correction amount. In addition, it is possible to appropriately correct the pixel values of pixels that are directly concerned with the banding phenomenon, and to obtain printing data enabling the "dark stripes" and the "white stripes" caused by the banding phenomenon to be effectively removed or to be less noticeable.

### Forty-second aspect

According to a forty-second aspect of the invention, in the image processing device according to any one of the thirty-fourth to forty-first aspects, each set of two nozzles is composed of a continuous series of two nozzles. In addition, one of two nozzles directly concerned with the banding phenomenon is common to two sets of nozzles, and the pixel value correcting unit corrects at least one of a pixel corresponding to the common nozzle and neighboring pixels, on the basis of the correction amounts corresponding to the two sets of two nozzles.

According to this aspect, it is possible to determine the sum (offset value) or the average of the correction amounts as the final correction amount of at least one of the pixel corresponding to the common nozzle and the neighboring pixels, on the basis of the correction amount corresponding to two sets of two nozzles including the common nozzle. In this way, it is possible to appropriately correct at least one of a corresponding pixel and neighboring pixels, which makes it possible to obtain printing data enabling the "dark stripes" and the "white stripes" caused by the banding phenomenon to be effectively removed or to be less noticeable.

### Forty-third aspect

According to a forty-third aspect of the invention, in the image processing device according to any one of the thirty-fourth to forty-second aspects, the N-value conversion data creating unit converts the image data having the pixel values corrected by the pixel value correcting unit into an N value by using an error diffusion method or a dither method.

According to this structure, it is possible to obtain printing data capable of reliably achieving a high-quality printed matter substantially representing the intermediate grayscale level of the original image data.

### Forty-fourth aspect

According to a forty-fourth aspect of the invention, an image processing program allows a computer to function as: an image data acquiring unit that acquires M-value image data (M ≥ 3); a pixel value correcting unit that corrects at least one of pixel values of pixels corresponding to two nozzles directly concerned with a banding phenomenon in the M-value image data (M ≥ 3) acquired by the image data acquiring unit and pixel values of neighboring pixels, on the basis of printing state information indicating the printing state of two nozzles printing two adjacent lines among a plurality of nozzles included in a printing head, the plurality of nozzles being capable of printing dots having different sizes; an N-value conversion data creating unit that creates N-value conversion data by converting the image data having the pixel values corrected by the pixel value correcting unit into an N value (M > N ≥ 2); and a printing data creating unit that creates printing data to which dots having sizes corresponding to each pixel are allocated, on the basis of the N-value conversion data created by the N-value conversion data creating unit.

In this way, similar to the first aspect, it is possible to correct at least one of the pixel values of the pixels corresponding to the two nozzles that are directly concerned with the banding phenomenon and the pixel values of the neighboring pixels, on the basis of information indicating the printing state of two nozzles that print two adjacent lines. Therefore, it is possible to appropriately correct the pixel values. In addition, it is possible to obtain printing data enabling the "white stripes" or the "dark stripes" caused by the banding phenomenon due to density irregularity which results from a variation in the amount of ink discharged or due to the deviation of a dot forming position that results from the ink deflection discharged from nozzles to be effectively removed or to be less noticeable.

Further, since software can allow a general-purpose computer, such as a personal computer (PC), to perform the functions of the above-mentioned units, it is possible to economically and easily realize the above-mentioned units, as compared with a case in which dedicated software is installed to realize the above-mentioned units. In addition, it is possible to easily perform version-up of the program, such as functional modification or improvement, by rewriting a portion of the program.

### Forty-fifth aspect

According to a forty-fifth aspect of the invention, the image processing program according to the forty-fourth aspect allows the computer to further function as a correction amount information storage unit that stores correction amount information of at least one of the pixels corresponding to the two nozzles that are directly concerned with the banding phenomenon and the neighboring pixels, and the correction amount information is created on the basis of the printing state information. The pixel value correcting unit corrects the pixel values of at least one of the pixels corresponding to the two nozzles that are directly concerned with the banding phenomenon and the neighboring pixels, on the basis of the correction amount information stored in the correction amount information storage unit.

According to this structure, similar to the second aspect, it is possible to correct at least one of the pixel values of pixels corresponding to two nozzles that are directly concerned with the banding phenomenon and the pixel values of neighboring pixels that is, the pixel values of at least one of the pixels corresponding to the two nozzles and the neighboring pixels by using an appropriate correction amount previously created by, for example, experiments, on the basis of the printing state information of two nozzles of the printing head that print two adjacent lines. Therefore, it is possible to appropriately and easily correct the pixel values. In addition, it is possible to obtain printing data enabling "white stripes" or "dark stripes" caused by the banding phenomenon to be effectively removed or to be less noticeable.

### Forty-sixth aspect

According to a forty-sixth aspect of the invention, in the image processing program according to the forty-fourth aspect or the forty-fifth aspect, at least one of the pixels corresponding to the two nozzles that are directly concerned with the banding phenomenon and the neighboring pixels is set as pixels corresponding to a predetermined number of lines that are symmetrically continuous with respect to a line space between two lines printed by the two nozzles that are directly concerned with the banding phenomenon.

In this way, similar to the third aspect, it is possible to correct pixels corresponding to a predetermined number of lines that are symmetrically continuous with respect to a line space between two lines printed by two nozzles, on the basis of information indicating the printing state of two nozzles printing two adjacent lines. Therefore, the pixel values can be appropriately corrected. In addition, it is possible to obtain printing data enabling the "white stripes" or the "dark stripes" caused by the banding phenomenon due to irregularity density which results from a variation in the amount of ink discharged or due to the deviation of a dot forming position that results from the ink deflection discharged from nozzles to be effectively removed or to be less noticeable.

### Forty-seventh aspect

According to a forty-seventh aspect of the invention, in the image processing program according to any one of the forty-fourth to forty-sixth aspects, the printing state information includes information indicating the relationship between an actual printing interval of the two nozzles and an ideal printing interval thereof.

In this way, similar to the fourth aspect, it is possible to obtain printing data enabling the "white stripes" or the "dark stripes" occurring due to the banding phenomenon caused by the deviation between the actual printing interval of two nozzles and the ideal printing interval to be effectively removed or to be less noticeable.

### Forty-eighth aspect

According to a forty-eighth aspect of the invention, in the image processing program according to any one of the forty-fourth to forty-seventh aspects, the printing state information includes information related to the densities of dots formed by the two nozzles.

In this way, similar to the fifth aspect, it is possible to obtain printing data enabling "white stripes" or "dark stripes" occurring due to the banding phenomenon caused by a defect in the discharge of ink, such as density irregularity of dots formed by two nozzles, to be effectively removed or to be less noticeable.

### Forty-ninth aspect

According to a forty-ninth aspect of the invention, in the image processing program according to any one of the forty-fourth to forty-eighth aspects, the correction amount information is a data table capable of acquiring, from the printing state information corresponding to the two nozzles and the pixel values of the pixels corresponding to the two nozzles, the correction amount of at least one of the pixels and the neighboring pixels.

In this way, similar to the sixth aspect, it is possible to easily acquire the correction amount corresponding to at least one of the pixels corresponding to the two nozzles and the neighboring pixels from the data table by inputting the printing state information corresponding to the two nozzles and the pixel values of the pixels corresponding to the two nozzles. In addition, even when the input printing state information and correction amounts corresponding to the pixel values are not registered in the data table, it is possible to easily calculate correction amounts not registered in the data table on the basis of the registered correction amount information by means of interpolation. Therefore, it is possible to appropriately and easily correct the pixel values of the pixels that are directly concerned with the banding phenomenon, and to obtain printing data enabling "white stripes" or "dark stripes" caused by the banding phenomenon to be effectively removed or to be less noticeable.

### Fiftieth aspect

According to a fiftieth aspect of the invention, in the image processing program according to any one of the forty-fourth to forty-eighth aspects, the correction amount information is information of a function capable of acquiring the correction amounts of at least one of the pixels corresponding to the two nozzles and the neighboring pixels from the printing state information corresponding to the two nozzles and the pixel values of the pixels corresponding to the two nozzles.

In this way, similar to the seventh aspect, it is possible to easily acquire the correction amounts of at least one of the pixels corresponding to two nozzles and the neighboring pixels from the printing state information corresponding to the two nozzles and the pixel values of the pixels corresponding to the two nozzles, by calculation using the function. Therefore, it is possible to appropriately and easily correct the pixel values of the pixels that are directly concerned with the banding phenomenon, and to obtain printing data enabling "white stripes" or "dark stripes" caused by the banding phenomenon to be effectively removed or to be less noticeable. Since the correction amount is obtained by calculation on the basis of the information of the function, it is possible to further reduce the amount of data in the data table.

### Fifty-first aspect

According to a fifty-first aspect of the invention, in the image processing program according to the forty-ninth or the fiftieth aspect, the pixel value of each pixel is determined on the basis of the pixel value of the pixel and the pixel values of neighboring pixels.

In this way, similar to the eighth aspect, when white pixels are arranged around one black pixel, an area composed of the white pixels and the black pixel appears to be white. However, the pixel value of each pixel is determined considering the pixel values of the neighboring pixels, on the basis of the pixel value of a predetermined number of neighboring pixels, in such a manner that the average of the pixel value of each pixel and the pixel values of neighboring pixels is used as the pixel value of each pixel or the sum of values obtained by multiplying the pixel value of each pixel and the pixel values of neighboring pixels by a predetermined coefficient is used as the pixel value of each pixel. Therefore, it is possible to appropriately acquire a correction amount. In addition, it is possible to appropriately correct the pixel values of the pixels that are directly concerned with the banding phenomenon, and to obtain printing data enabling the "dark stripes" and the "white stripes" caused by the banding phenomenon to be effectively removed or to be less noticeable.

### Fifty-second aspect

According to a fifty-second aspect of the invention, in the image processing program according to any one of the forty-fourth to fifty-first aspects, each set of two nozzles is composed of a continuous series of two nozzles. In addition, one of two nozzles directly concerned with the banding phenomenon is common to two sets of nozzles, and the pixel value correcting unit corrects at least one of a pixel corresponding to the common nozzle and neighboring pixels, on the basis of the correction amounts corresponding to the two sets of two nozzles.

In this way, similar to the ninth aspect, it is possible to determine the sum (offset value) or the average of the correction amounts as the final correction amount of at least one of the pixel corresponding to the common nozzle and the neighboring pixels, on the basis of the correction amount corresponding to two sets of two nozzles including the common nozzle. Thus, it is possible to appropriately correct at least one of a corresponding pixel and neighboring pixels, which makes it possible to obtain printing data enabling the "dark stripes" and the "white stripes" caused by the banding phenomenon to be effectively removed or to be less noticeable.

### Fifty-third aspect

According to a fifty-third aspect of the invention, in the image processing program according to any one of the forty-fourth to fifty-second aspects, the N-value conversion data creating unit converts the image data having the pixel values corrected by the pixel value correcting unit into an N value by using an error diffusion method or a dither method.

In this way, similar to the ninth aspect, it is possible to obtain printing data capable of reliably achieving a high-quality printed matter substantially representing the intermediate grayscale level of the original image data.

### Fifty-fourth aspect

According to a fifty-fourth aspect of the invention, a computer readable recording medium has the image processing program according to any one of the forty-fourth to fifty-third aspects recorded therein.

In this way, it is possible to easily and reliably provide the image processing program according to any one of the forty-fourth to fifty-third aspects to administrators, such as users, through a computer readable recoding medium, such as a CD-ROM, a DVD-ROM, an FD, or a semiconductor chip.

### Fifty-fifth aspect

According to a fifty-fifth aspect of the invention, an image processing method includes: acquiring M-value image data (M ≥ 3); correcting at least one of pixel values of pixels corresponding to two nozzles directly concerned with a banding phenomenon and pixel values of neighboring pixels in the M-value image data (M ≥ 3) acquired in the acquiring of the image data, on the basis of printing state information indicating the printing state of two nozzles printing two adjacent lines among a plurality of nozzles included in a printing head, the plurality of nozzles being capable of printing dots having different sizes; creating N-value conversion data by converting the image data having the pixel values corrected in the correcting of the pixel values into an N value (M > N ≥ 2); and creating printing data to which dots having sizes corresponding to each pixel are allocated, on the basis of the N-value conversion data created in the creating of the N-value conversion data.

In this way, similar to the first aspect, it is possible to correct at least one of the pixel values of the pixels corresponding to the two nozzles that are directly concerned with the banding phenomenon and the pixel values of the neighboring pixels, on the basis of information indicating the printing state of two nozzles that print two adjacent lines. Therefore, it is possible to appropriately correct the pixel values. In addition, it is possible to obtain printing data enabling the "white stripes" or the "dark stripes" caused by the banding phenomenon occurring due to density irregularity which results from a variation in the amount of ink discharged or due to the deviation of a dot forming position that results from the ink deflection discharged from nozzles to be effectively removed or to be less noticeable.

### Fifty-sixth aspect

According to a fifty-sixth aspect of the invention, in the image processing method according to the fifty-fifth aspect, in the correcting of the pixel values, the pixel value of at least one of the pixels corresponding to the two nozzles that are directly concerned with the banding phenomenon and the neighbouring pixels is corrected, on the basis of correction amount information of the at least one of the pixels corresponding to the two nozzles that are directly concerned with the banding phenomenon and the neighboring pixels, and the correction amount information is created on the basis of the printing state information.

In this way, similar to the second aspect, it is possible to correct at least one of the pixel values of the pixels corresponding to two nozzles that are directly concerned with the banding phenomenon and the pixel values of the neighboring pixels that is, the pixel values of at least one of the pixels corresponding to the two nozzles and the neighboring pixels by using an appropriate correction amount that is previously created by, for example, experiments, on the basis of the printing state information of two nozzles of the printing head that print two adjacent lines. Therefore, it is possible to appropriately and easily correct the pixel values. In addition, it is possible to obtain printing data enabling "white stripes" or "dark stripes" caused by the banding phenomenon to be effectively removed or to be less noticeable.

### Fifty-seventh aspect

According to a fifty-seventh aspect, in the image processing method according to the fifty-fifth aspect or the fifty-sixty aspect, at least one of the pixels corresponding to the two nozzles that are directly concerned with the banding phenomenon and the neighboring pixels is set as pixels corresponding to a predetermined number of lines that are symmetrically continuous with respect to a line space between two lines printed by the two nozzles that are directly concerned with the banding phenomenon.

In this way, similar to the third aspect, it is possible to correct pixels corresponding to a predetermined number of lines that are symmetrically continuous with respect to a line space between two lines printed by two nozzles, on the basis of information indicating the printing state of two nozzles printing two adjacent lines. Therefore, the pixel values can be appropriately corrected. In addition, it is possible to obtain printing data enabling "white stripes" or "dark stripes" caused by the banding phenomenon occurring due to irregular density which results from a variation in the amount of ink discharged or due to the deviation of a dot forming position that results from the ink deflection discharged from nozzles to be effectively removed or to be less noticeable.

### Fifty-eighth aspect

According to a fifty-eighth aspect of the invention, in the image processing method according to any one of the fifty-fourth to fifty-seventh aspects, the printing state information includes information indicating the relationship between an actual printing interval of the two nozzles and an ideal printing interval thereof.

In this way, similar to the fourth aspect, it is possible to obtain printing data enabling "white stripes" or "dark stripes" occurring due to the banding phenomenon caused by the deviation between the actual printing interval of two nozzles and the ideal printing interval to be effectively removed or to be less noticeable.

### Fifty-ninth aspect

According to a fifty-ninth aspect of the invention, in the image processing method according to any one of the fifty-fourth to fifty-eighth aspects, the printing state information includes information related to the densities of dots formed by the two nozzles.

In this way, similar to the fifth aspect, for example, it is possible to obtain printing data enabling "white stripes" or "dark stripes" occurring due to the banding phenomenon caused by a defect in the discharge of ink, such as density irregularity of dots formed by two nozzles, to be effectively removed or to be less noticeable.

### Sixtieth aspect

According to a sixtieth aspect of the invention, in the image processing method according to any one of the fifty-fourth to fifty-ninth aspects, the correction amount information is a data table capable of acquiring the correction amount of at least one of the pixels corresponding to the two nozzles and the neighboring pixels from the printing state information corresponding to the two nozzles and the pixel values of the pixels corresponding to the two nozzles.

In this way, similar to the sixth aspect, it is possible to easily acquire the correction amount corresponding to at least one of the pixels corresponding to the two nozzles and the neighboring pixels from the data table by inputting the printing state information corresponding to the two nozzles and the pixel values of the pixels corresponding to the two nozzles. In addition, even when the input printing state information and correction amounts corresponding to the pixel values are not registered in the data table, it is possible to easily calculate correction amounts not registered in the data table on the basis of the registered correction amount information by means of interpolation. Therefore, it is possible to appropriately and easily correct the pixel values of the pixels that are directly concerned with the banding phenomenon, and to obtain printing data enabling "white stripes" or "dark stripes" caused by the banding phenomenon to be effectively removed or to be less noticeable.

### Sixty-first aspect

According to a sixth-first aspect of the invention, in the image processing method according to any one of the fifty-fourth to fifty-ninth aspects, the correction amount information is information of a function capable of acquiring the correction amounts of at least one of the pixels corresponding to the two nozzles and the neighboring pixels from the printing state information corresponding to the two nozzles and the pixel values of the pixels corresponding to the two nozzles.

In this way, similar to the seventh aspect, it is possible to easily acquire the correction amounts of at least one of the pixels corresponding to two nozzles and neighboring pixels from the printing state information corresponding to the two nozzles and the pixel values of the pixels corresponding to the two nozzles, by calculation using the function. Therefore, it is possible to appropriately and easily correct the pixel values of the pixels that are directly concerned with the banding phenomenon, and to obtain printing data enabling "white stripes" or "dark stripes" caused by the banding phenomenon to be effectively removed or to be less noticeable. Since the correction amount is obtained by calculation on the basis of the information of the function, it is possible to further reduce the amount of data in the data table.

### Sixty-second aspect

According to a sixty-second aspect of the invention, in the image processing method according to the sixtieth aspect or the sixty-first aspect, the pixel value of each pixel is determined on the basis of the pixel value of the pixel and the pixel values of neighboring pixels.

In this way, similar to the eighth aspect, when white pixels are arranged around one black pixel, an area composed of the white pixels and the black pixel appears to be white. However, the pixel value of each pixel is determined considering the pixel values of neighboring pixels, on the basis of the pixel value of a predetermined number of neighboring pixels, in such a manner that the average of the pixel value of each pixel and the pixel values of neighboring pixels is used as the pixel value of each pixel or the sum of values obtained by multiplying the pixel value of each pixel and the pixel values of neighboring pixels by a predetermined coefficient is used as the pixel value of each pixel. Therefore, it is possible to appropriately acquire a correction amount. In addition, it is possible to appropriately correct the pixel values of pixels that are directly concerned with the banding phenomenon, and to obtain printing data enabling the "dark stripes" and the "white stripes" caused by the banding phenomenon to be effectively removed or to be less noticeable.

### Sixth-third aspect

According to a sixth-third aspect of the invention, in the image processing method according to any one of the fifty-fifth to sixty-second aspects, each set of two nozzles is composed of a continuous series of two nozzles. In addition, in correcting of the pixel values, one of two nozzles directly concerned with the banding phenomenon is common to two sets of nozzles, and at least one of a pixel corresponding to the common nozzle and neighboring pixels is corrected, on the basis of the correction amounts corresponding to the two sets of two nozzles.

In this way, similar to the ninth aspect, it is possible to determine the sum (offset value) or the average of the correction amounts as the final correction amount of at least one of the pixel corresponding to the common nozzle and the neighboring pixels, on the basis of the correction amount corresponding to two sets of two nozzles including the common nozzle. In this way, it is possible to appropriately correct at least one of a corresponding pixel and neighboring pixels, which makes it possible to obtain printing data enabling the "dark stripes" and the "white stripes" caused by the banding phenomenon to be effectively removed or to be less noticeable.

### Sixty-fourth aspect

According to a sixty-fourth aspect of the invention, in the image processing method according to any one of the fifty-fifth to sixty-third aspects, in the creating of the N-value conversion data, the image data having the pixel values corrected in the correcting of the pixel values is converted into an N value by an error diffusion method or a dither method.

In this way, similar to the tenth aspect, it is possible to obtain printing data capable of reliably achieving a high-quality printed matter substantially representing the intermediate grayscale level of the original image data.

Embodiments of the invention will be described by way of example only and with reference to the accompanying drawings, wherein like numbers refer to like elements.

Fig. 1 is a functional block diagram illustrating a printing apparatus according to an embodiment of the invention.

Fig. 2 is a partial enlarged bottom view illustrating the structure of a printing head according to the invention.

Fig. 3 is a partial enlarged side view illustrating the printing head according to the invention.

Fig. 4 is a conceptual diagram illustrating an example of an ideal dot pattern having no ink deflection.

Fig. 5 is a conceptual diagram illustrating an example of a dot pattern formed by the ink deflection of one nozzle.

Fig. 6 is a diagram illustrating an example of a dot/grayscale table indicating the relationship between a pixel value, a grayscale value, and a dot size.

Fig. 7 is a block diagram illustrating the hardware structure of a computer system for realizing the printing apparatus according to the invention.

Fig. 8A is a diagram illustrating an ideal dot pattern.

Fig. 8B is a diagram illustrating a dot pattern when ink deflection occurs in a nozzle N4.

Figs. 9A and 9B are diagrams illustrating dot patterns formed due to banding phenomenon caused by an error between printing positions of heads when the printing head 200 scans the same printing medium plural times.

Figs. 10A and 10B are diagrams illustrating dot patterns when a plurality of nozzles cause ink deflection in the same direction.

Fig. 11 is a diagram illustrating an example of a dot pattern when ink deflection occurs in two nozzles.

Fig. 12A is a diagram illustrating an example of a density correcting method according to the related art.

Fig. 12B is a diagram illustrating a density correcting method according to the invention.

Figs. 12C and 12D are diagrams illustrating examples of density measuring methods according to the related art.

Figs. 12E and 12F are diagrams illustrating examples of density measuring methods according to the invention.

Fig. 13A is a diagram illustrating an ideal dot pattern formed by a nozzle A and a nozzle B.

Fig. 13B is a diagram illustrating an example of a method of measuring the amount of ink deflection according to the related art when the same ink deflection occurs in the nozzle A and the nozzle B.

Fig. 13C is a diagram illustrating a method of measuring the amount of ink deflection according to the invention when the same ink deflection occurs in the nozzle A and the nozzle B.

Fig. 14 is a diagram illustrating an example of a printing state information table.

Fig. 15 is a diagram illustrating an example of the result obtained by correcting an error between ink drop gaps.

Fig. 16 is a diagram illustrating an example of a correction amount information table.

Fig. 17 is a flow chart illustrating an example of a printing process.

Fig. 18 is a flow chart illustrating an example of a pixel value correcting process performed by a pixel value correcting unit 16.

Fig. 19 is a diagram illustrating an example in which the printing head 200 scans a recording medium two times to print an image.

Figs. 20A to 20F are diagrams illustrating the selection of neighboring pixels when the pixel value of a selected pixel is determined on the basis of the pixel values of the neighboring pixels.

Fig. 21 is a diagram illustrating an example of the interpolation of a correction amount.

Fig. 22 is a diagram illustrating the effects of the invention.

Fig. 23 is a diagram illustrating an example in which information of a function for calculating a correction amount from a pixel value is used as correction amount information.

Fig. 24 is a diagram illustrating an example in which information of a function for calculating a gradient and an intercept of the function shown in Fig. 23 is used as correction amount information.

Figs. 25A to 25C are diagrams illustrating the difference between printing methods of a multi-pass inkjet printer and a line-head-type inkjet printer.

Fig. 26 is a conceptual diagram illustrating another example of the structure of the printing head.

Fig. 27 is a conceptual diagram illustrating an example of a computer readable recording medium having a program according to the invention recorded therein.

Fig. 28 is a diagram illustrating an ideal printing interval.

Hereinafter, preferred embodiments of the invention will be described with reference to the accompanying drawings.

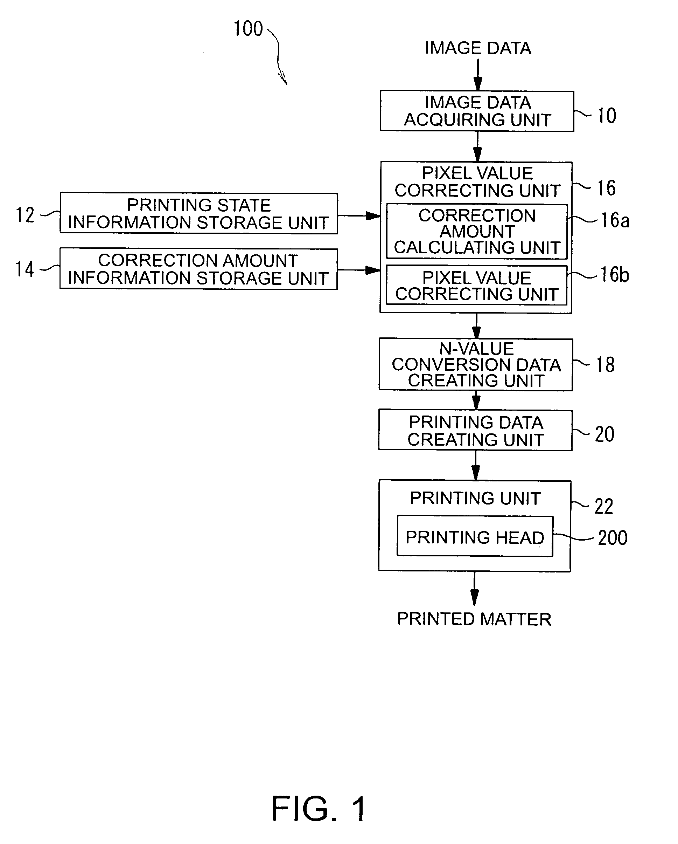

Figs. 1 to 22 show a printing device, a printing program, a printing method, an image processing device, an image processing program, an image processing method, and a computer readable recording medium according to embodiments of the invention.

Fig. 1 is a functional block diagram illustrating a printing device 100 according to an embodiment of the invention.

As shown in Fig. 1, the printing device 100 includes: a printing head 200 capable of printing dots having different sizes; an image data acquiring unit 10 that acquires image data of an M value (M ≥ 3); a printing state information storage unit 12 that stores printing state information indicating the printing state of two nozzles for printing adjacent two lines among nozzles of a printing head 200, which will be described later; a correction amount information storage unit 14 that stores correction amount information used to correct a pixel value of a pixel directly concerned with a banding phenomenon caused by the two nozzles; a pixel value correcting unit 16 that corrects the pixel value of the pixel directly concerned with the generation of the banding phenomenon, on the basis of the correction amount information; an N-value conversion data creating unit 18 that converts image data having the image value corrected by the pixel value correcting unit 16 into an N value (M> N ≥ 2) to create N-value conversion data; a printing data creating unit 20 that creates printing data to which a dot having a size corresponding to each pixel is allocated, on the basis of the N-value conversion data created by the N-value conversion data creating unit 18; and a printing unit 22 that performs printing by using the printing head, on the basis of the printing data created by the printing data creating unit 20.

Next, a printing head 200 according to an embodiment of the invention will be described below.

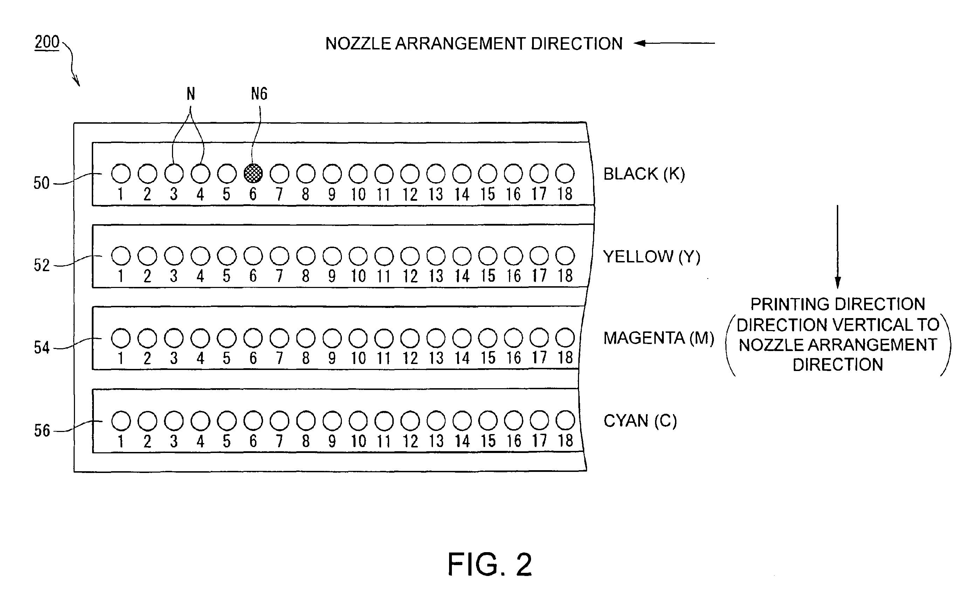

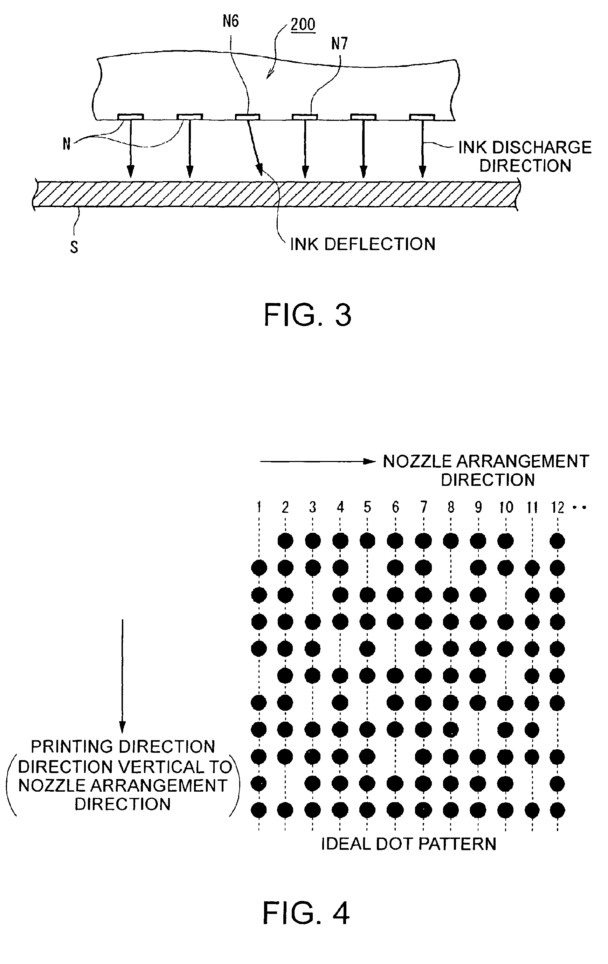

Fig. 2 is a partial enlarged bottom view illustrating the structure of the printing head 200, and Fig. 3 is a partial enlarged side view of the printing head 200.

As shown in Fig. 2, the printing head 200 has four nozzle modules, that is, a black nozzle module 50, a yellow nozzle module 52, a magenta nozzle module 54, and a cyan nozzle module 56. In the black nozzle module 50, a plurality of nozzles N (for example, 180 nozzles) only for black (K) ink are linearly arranged in a nozzle arrangement direction. In the yellow nozzle module 52, a plurality of nozzles N only for yellow (Y) ink are linearly arranged in the nozzle arrangement direction. In the magenta nozzle module 54, a plurality of nozzles N only for magenta (M) ink are linearly arranged in the nozzle arrangement direction. In the cyan nozzle module 56, a plurality of nozzles N only for cyan (C) ink are linearly arranged in the nozzle arrangement direction. In addition, the four nozzle modules 50, 52, 54, and 56 are integrally arranged such that nozzles N having the same number in the four nozzle modules 50, 52, 54, and 56 are linearly arranged in a direction vertical to the nozzle arrangement direction, as shown in Fig. 2. Accordingly, the plurality of nozzles N constituting each of the nozzle modules are linearly arranged in the nozzle arrangement direction, and the nozzles N having the same number in the four nozzle modules 50, 52, 54, and 56 are linearly arranged in the direction vertical to the nozzle arrangement direction.

In addition, in the printing head 200 having the above-mentioned structure, a piezoelectric element, such as a piezoelectric actuator (not shown), provided for each ink chamber ejects ink supplied to an ink chamber (not shown) that is provided for each of the nozzles N1, N2, N3, and so on from each of the nozzles N1, N2, N3, and so on, thereby printing a circular dot on a white printing sheet. Further, the printing head 200 can control a voltage applied to the piezoelectric elements in a multistage to adjust an ink ejection amount from each ink chamber, so that it can print dots having different sizes from the nozzles N1, N2, N3, and so on. In addition, a voltage may be applied in time series to the nozzle in two stages for a short time, so that ink is ejected two times at one spot to form a dot. In this case, by using the fact that an ejection speed depends on a dot size, ink having a small dot is ejected at a position on the sheet and then ink having a large dot is ejected at almost the same position, thereby forming a large dot on the sheet.

Fig. 3 is a side view illustrating the black nozzle module 50 among the four nozzle modules 50, 52, 54, and 56. In Fig. 3, an ink deflection phenomenon occurs in a sixth nozzle N6 from the left , and ink is obliquely ejected onto a printing medium S from the sixth nozzle N6, so that a dot formed on the printing medium S is printed (formed) in the vicinity of another dot on the printing medium S which is ejected from a normal nozzle N7 adjacent to the nozzle N6.

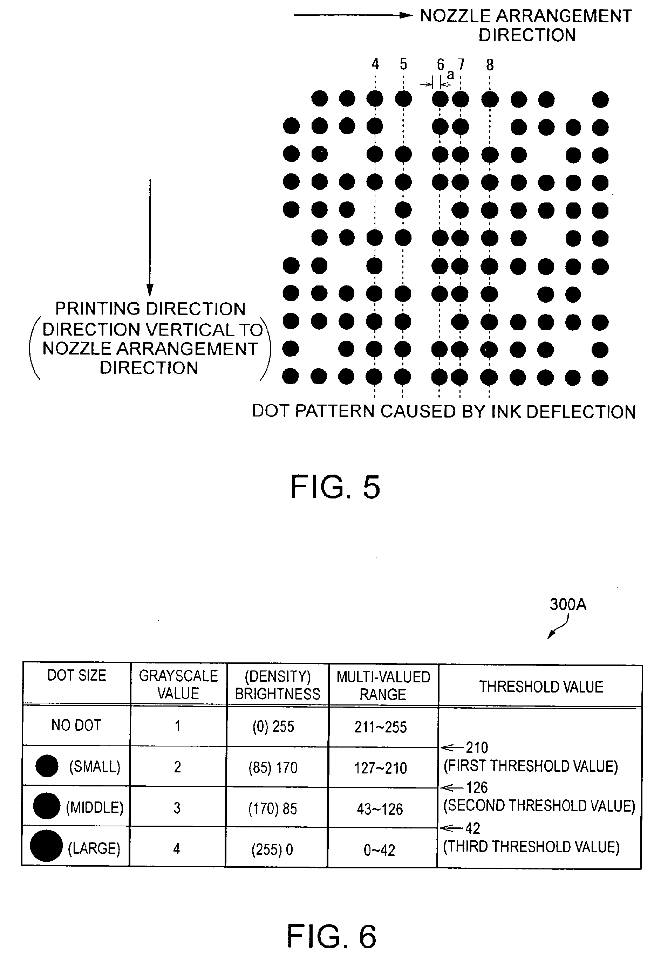

When the ink deflection phenomenon does not occur, the black nozzle module 50 prints all dots at desired positions, as shown in Fig. 4 (ideal dot pattern). On the other hand, when the ink deflection phenomenon occurs in the sixth nozzle N6 from the left, the dot ejected from the sixth nozzle N6 is formed at a position tending towards the dot formed by the normal nozzle N7 adjacent to the sixth nozzle N6 from a target printing position (ideal printing position) thereof by a distance "a", as shown in Fig. 5.

Next, the image data acquiring unit 10 acquires color image data of an M value (M ≥ 3) related to printing that is transmitted from a printing instruction apparatus (not shown), such as a personal computer (PC) or a printer server, connected to the printing apparatus 100 through, for example, a network, or directly reads out color image data from an image (data) reading apparatus (not shown), such as a scanner or a CD-ROM drive. When the acquired color image data of the M value is RGB data of the M value, for example, image data in which the grayscale value (brightness value) of each color R, G, and B of each pixel is represented by 8 bits (0 to 255 levels), the image data acquiring unit 10 also converts the acquired image data into CMYK (in case of four colors) data of an M value corresponding to each ink of the printing head 200.

As described above, the printing state information storage unit 12 stores information indicating the printing state of two nozzles for printing adjacent two lines in each of the nozzle modules of the printing head 200. As shown in Fig. 2, since the nozzles of each of the nozzle modules in the printing head 200 are arranged in a line in the nozzle arrangement direction, the nozzles perform printing on the basis of pixel data arranged in a direction vertical to the nozzle arrangement direction. Therefore, two adjacent lines are adjacent pixel lines formed by the pixel data arranged in the direction vertical to the nozzle arrangement direction. Any of the following information items may be used as printing state information: information on the difference between an actual distance between dots formed by two nozzles (distance between centers of two dots) and an ideal distance therebetween; and the density values of dots formed by two nozzles that are measured by an optical reading device, such as a scanner. Two nozzles for printing two adjacent lines are simply referred to as two adjacent nozzles.

When "white stripes" or "dark stripes" occur in a pattern printed by two adjacent nozzles due to the banding phenomenon, the correction amount information storage unit 14 stores information on a correction amount used for correcting the pixel value such that the "white stripes" or "dark stripes" does not visually appear. The information on correction amount is created by determining the state of a reduction in the "white stripes" or "dark stripes" after the pixel value is corrected with the naked eye by, for example, experiments and determining a correction amount allowing no or little "white stripes" or "dark stripes" to visually appear. For example, the correction amount may be automatically determined by previously determining threshold values for every condition and comparing the threshold value with the density value of a pixel causing the "white stripes" or "dark stripes" after the pixel value is corrected.

As shown in Fig. 1, the pixel value correcting unit 16 includes a correction amount calculating unit 16a and a pixel value correcting unit 16b. The correction amount calculating unit 16a calculates a correction amount used to correct the pixel values of pixels corresponding to abnormal nozzles N and N+1, on the basis of the correction amount information stored in the correction amount information storage unit 14. The pixel value correcting unit 16b corrects the pixel values of the pixels corresponding to the abnormal nozzles N and N+1, on the basis of the correction amount calculated by the correction amount calculating unit 16a. The pixel value correcting unit 16 determines whether two adjacent nozzles of the printing head 200 cause the ink deflection phenomenon or density irregularity and are concerned with the banding phenomenon, on the basis of the printing state information stored in the printing state information storage unit 12. When it is determined that the two adjacent nozzles are concerned with the banding phenomenon, the pixel value correcting unit 16 specifies which of the two abnormal nozzles N and N+1 causes the banding phenomenon. In addition, in the pixel value correcting unit 16, the correction amount calculating unit 16a calculates the correction amounts of the pixel values of the pixels corresponding to the specified abnormal nozzles N and N+1, on the basis of the correction amount information stored in the correction amount information storage unit 14. The pixel value correcting unit 16b corrects the pixel values of the abnormal nozzles N and N+1 on the basis of the calculated correction amount. Specific examples of the process of calculating the correction amount and the process of correcting the pixel value will be described in detail later.

The N-value conversion data creating unit 18 converts image data having the pixel value corrected by the pixel value correcting unit 16 into an N value (M > N ≥ 2) to create N-value conversion data.

More specifically, the pixel value (grayscale value) of each pixel of the image data after the pixel value of the pixel directly concerned with the banding phenomenon is corrected by the pixel value correcting unit 16 is specified by 8 bits, 256 grayscale levels. When the pixel values are classified into four (N = 4), as shown in a dot/grayscale conversion table 300A of Fig. 6, the pixel values of the pixels are classified into four by using three threshold values.

In the dot/grayscale conversion table 300A shown in Fig. 6, a rightmost field shows the relationship between the pixel value and the threshold value when the multi-level pixel values are classified into four (N = 4) by the N-value conversion data creating unit 18.

That is, as shown in the dot/grayscale conversion table 300A, when the pixel value (brightness values) of each pixel of the multi-valued image data is specified by 8 bits (0 to 255 levels), three threshold values, that is, "210 (first threshold value)", "126 (second threshold value)", and "42 (third threshold value)" are used. When the pixel value is in the range of "211 to 255", a grayscale value is 1 (brightness level "255" and density level "0"). When the pixel value is in the range of "127 to 210", a grayscale value is 2 (brightness level "170" and density level "85"). When the pixel value is in the range of "43 to 126", a grayscale value is 3 (brightness level "85" and density level "170"). When the pixel value is in the range of "0 to 42", a grayscale value is 4 (brightness level "0" and density level "255"). It is possible to perform pseudo expression of four or more grayscale values by using area grayscale, according to the N-value conversion. For example, an error diffusion method is one method of expressing the area grayscale. The error diffusion method realizes the area grayscale by diffusing the error generated when 4-value conversion is performed on a target pixel to a pixel on which the 4-value conversion is not performed.

The printing data creating unit 20 sets a corresponding dot for every pixel having the N-value conversion data and creates printing data used for an inkjet printing unit 22.

A left field of the dot/grayscale conversion table 300A shown in Fig. 6 shows the relationship between a dot size and the pixel value of each pixel of the N-value conversion data performed by the printing data creating unit 20.

In Fig. 6, in a case in which the grayscale levels are classified into four levels (N = 4) and a brightness value is selected as the pixel value, when the grayscale value is 1, the dot size is converted into "no dot". When the grayscale value is 2, the dot size is converted into "small dot" indicating that the area of a dot is smallest. When the grayscale value is 3, the dot size is converted into "middle dot" indicating that the area of a dot is slightly larger than the "small dot". When the grayscale value is 4, the dot size is converted into "large dot" indicating that the area of a dot is largest. When a "density value" is used as the pixel value, the dot size is reversely converted with respect to the "brightness value".

The printing unit 22 is an inkjet printer that discharges ink in the form of dots on a printing sheet from the nozzle modules 50, 52, 54, and 56 formed in the printing head 200 while moving one of or both the recording medium S and the printing head 200, thereby forming a desired image composed of a lot of dots on the printing sheet. The printing unit 22 may include known components, such as a printing head transfer mechanism (in the multi-pass type) (not shown) that reciprocates the printing head 200 on the printing medium S in the widthwise direction thereof, a sheet transfer mechanism (not shown) that moves the printing medium S, and a printing control mechanism (not shown) that controls the discharge of ink from the printing head 200 on the basis of the printing data, in addition to the printing head 200.

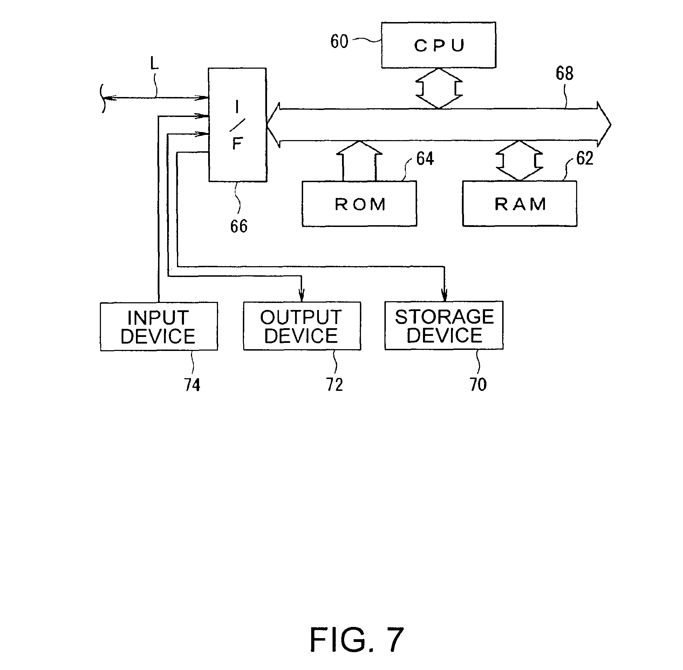

The printing apparatus 100 includes a computer system that performs various control operations for printing and realizes the image data acquiring unit 10, the pixel value correcting unit 16, the N-value conversion data creating unit 18, the printing data creating unit 20, and the printing unit 22 by using software. As shown in Fig. 7, the computer system has a hardware structure in which a CPU 60 serving as a central processing unit for performing various control or operation processes, a RAM 62 (random access memory) constituting a main storage device, and a ROM 64 (read only memory) serving as a read only storage device are connected to one another through an internal/external bus 68 composed of a PCI (peripheral component interconnect) bus or an ISA (industrial standard architecture) bus, and an external storage device 70 (secondary storage device), such as an HDD, an output device 72, such as a printing unit, a CRT monitor, or an LCD monitor, an input device 74, such as an operation panel, a mouse, a keyboard, or a scanner, and a network cable L which communicates with a printing instruction device (not shown) are connected to the bus 68 through an input/output interface (I/F) 66.

When power is supplied, a system program, such as a BIOS stored in, for example, the ROM 64 loads onto the RAM 62 various exclusive computer programs stored in the ROM 64 beforehand, or various exclusive computer programs installed in the storage device 70 through a storage medium, such as a CD-ROM, a DVD-ROM, or a flexible disk (FD) or through a communication network L, such as the Internet. The CPU 60 performs predetermined control and operation processes by driving various resources in accordance with commands described in the programs loaded onto the RAM 62 and realizes the above-mentioned functions by using software.

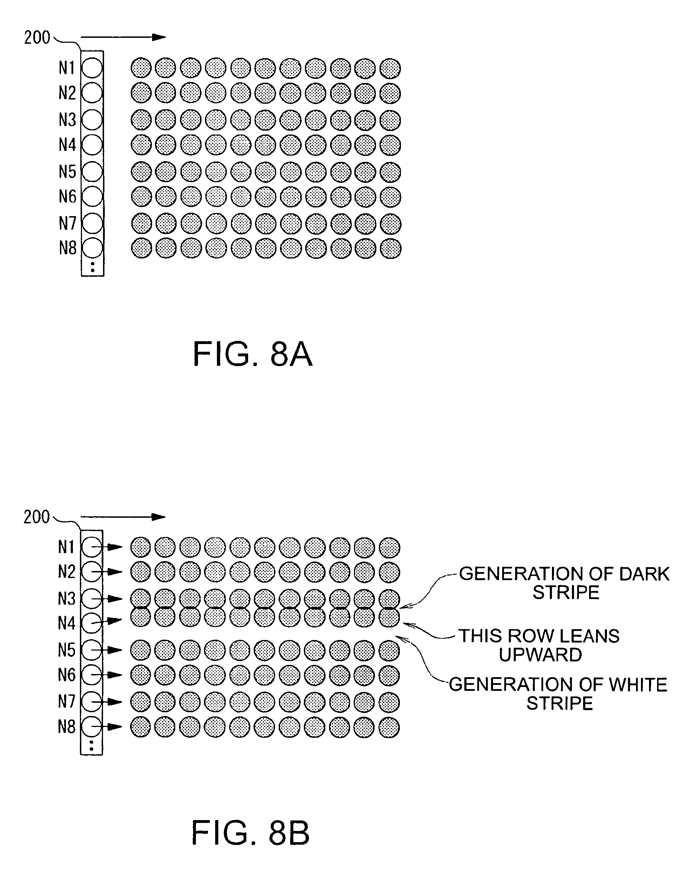

Next, the printing state information and the correction amount information will be described in detail with reference to Figs. 8A to 15.

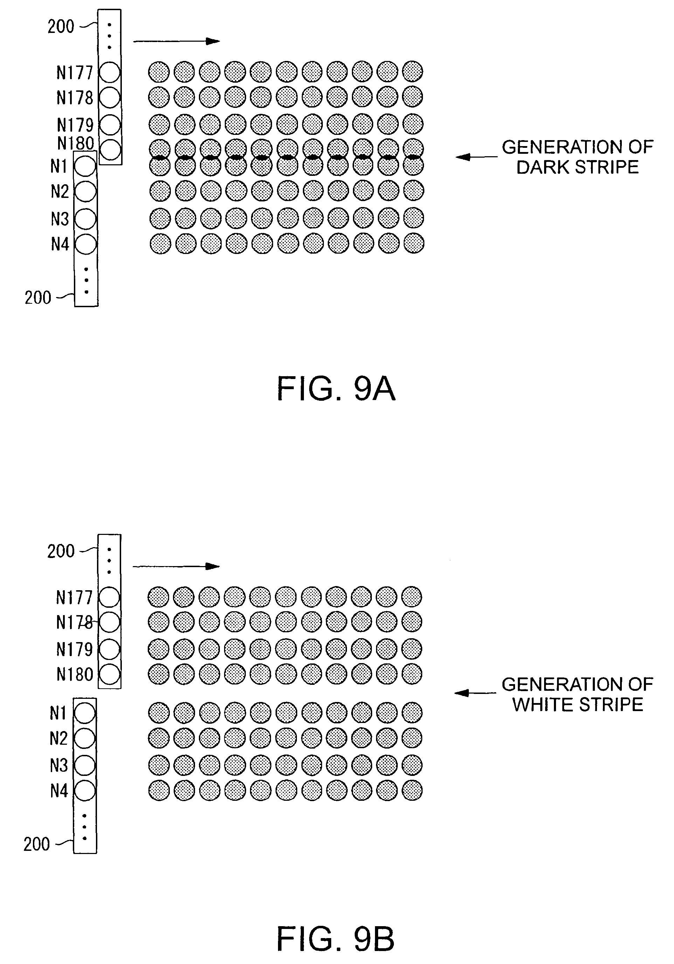

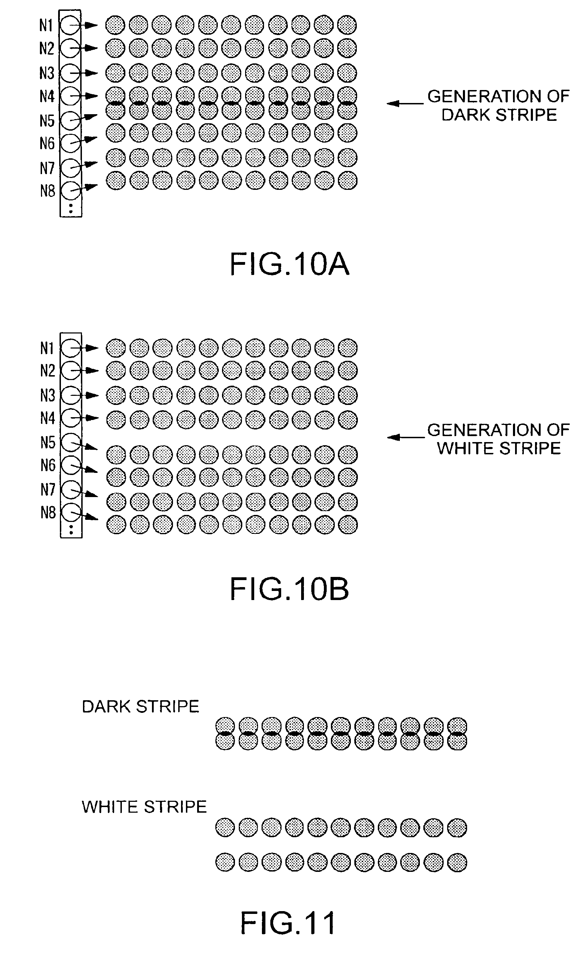

Fig. 8A is a diagram illustrating an ideal dot pattern, and Fig. 8B is a diagram illustrating a dot pattern when ink deflection occurs in the nozzle N4. Figs. 9A and 9B are diagrams illustrating examples of a dot pattern when the banding phenomenon occurs due to an error between the printing positions of heads. Figs. 10A and 10B are diagrams illustrating examples a dot pattern when a plurality of nozzles cause the ink deflection phenomenon in the same direction. Fig. 11 is a diagram illustrating an example of a dot pattern when the ink deflection phenomenon occurs in two nozzles.

First, several examples of the banding phenomenon occurring due to the deviation between the ideal dot forming position and the actual dot forming position of the nozzles of the printing head 200 will be described.

When the nozzles causing the deviation between the ideal dot forming position and the actual dot forming position do not exist in the printing head 200, dots are formed to be aligned at regular intervals, as shown in Fig. 8A. Meanwhile, similar to Fig. 5, as shown in Fig. 8B, when the ink deflection phenomenon occurs in a nozzle N4, a portion of the dot formed by the nozzle N4 overlaps the dot formed by a nozzle N3, and a gap between the dot formed by the nozzle N4 and the dot formed by a nozzle N5 is larger than that in the ideal state shown in Fig. 8A. In this state, a dark stripe occurs in the overlapping portion of the dots, and a white stripe occurs in a separating portion between the dots. That is, the ink deflection phenomenon of the nozzle causes the banding phenomenon.

In a case in which one printing head 200 scans the same printing medium plural times to print an image, or a plurality of printing heads 200 arranged in a lattice shape simultaneously scan to print an image, when a connecting position between printing heads deviates from the ideal position in a direction in which one of a nozzle N1 and a nozzle N180 located at the connecting position approaches the other nozzle, as shown in Fig. 9A, the dot formed by the nozzle N180 partially overlaps the dot formed by the nozzle N1, which causes a "dark stripe". On the other hand, as shown in Fig. 9B, the connecting position deviates from the ideal position in a direction the nozzle N1 and the nozzle N180 located at the connecting position are separated from each other, the distance between the dot formed by the nozzle N180 and the dot formed by the nozzle N1 is larger than a predetermined distance, which causes a "white stripe". That is, the deviation between the ideal position and the connecting position between the printing heads also causes the banding phenomenon. Since the base of the printing head protrudes, when the printing heads are merely in a line, the protruding portions are located at the connecting position. Therefore, the printing heads are arranged in a lattice shape in order to prevent a gap between the nozzles arranged at the edge of each printing head from being larger than a gap between other nozzles.

As an example of the ink deflection phenomenon, when the ink deflection phenomenon occurs in a plurality of nozzles in the same direction and in the same amount of ink deflection and when the dot forming positions of all abnormal nozzles deviate in the same direction, with the abnormal nozzles causing the ink deflection phenomenon arranged at a normal gap, as shown in Fig. 10A, the "dark stripe" occurs in only a portion in which the dot formed by a first dot among a plurality of abnormal nozzles overlaps a dot formed at the ideal dot forming position. Meanwhile, as shown in Fig. 10B, the "white stripe" occurs in only a portion where the gap between the dot formed by the first nozzle among the plurality of abnormal nozzles and the dot formed at the ideal dot forming position is larger than a predetermined gap. That is, when a plurality of nozzles cause the ink deflection phenomenon at the same time in the same direction and in the same amount of ink deflection, the banding phenomenon occurs only between the first nozzles among these nozzles and another nozzle adjacent to the first nozzle, but does not occur in the other positions. When the ink deflection phenomenon occurs, it is possible to deal with it in the same manner as that described in Figs. 9A and 9B. That is, the phenomena of Figs. 10A and 10B and the phenomena of Figs. 9A and Fig. 9B are generated by different causes, but can be collectively handled from the viewpoint of the ink deflection (deviation between landing positions).

As described above, paying attention to the ink deflection phenomenon of the nozzle, as shown in Fig. 11, the "dark stripe" caused by the overlapping of two dots formed by two adjacent nozzles and the "white stripe" caused by the gap between the dots formed by two adjacent nozzles larger than a predetermined gap are deeply concerned with the banding phenomenon. Therefore, it is possible to simplify banding caused by the ink deflection phenomenon to the two states, that is, the "dark stripe" and the "white stripe".

Accordingly, it is possible to accurately specify the nozzles directly concerned with the banding phenomenon by determining whether two adjacent nozzles of the printing head 200 are concerned with the banding phenomenon from the dot forming state (printing state) of the two nozzles. In addition, it is possible to appropriately remove the "dark stripe" and the "white stripe" due to the banding phenomenon or to make the "dark stripe" and the "white stripe" less noticeable by correcting the pixel values of the pixels corresponding to the two nozzles.

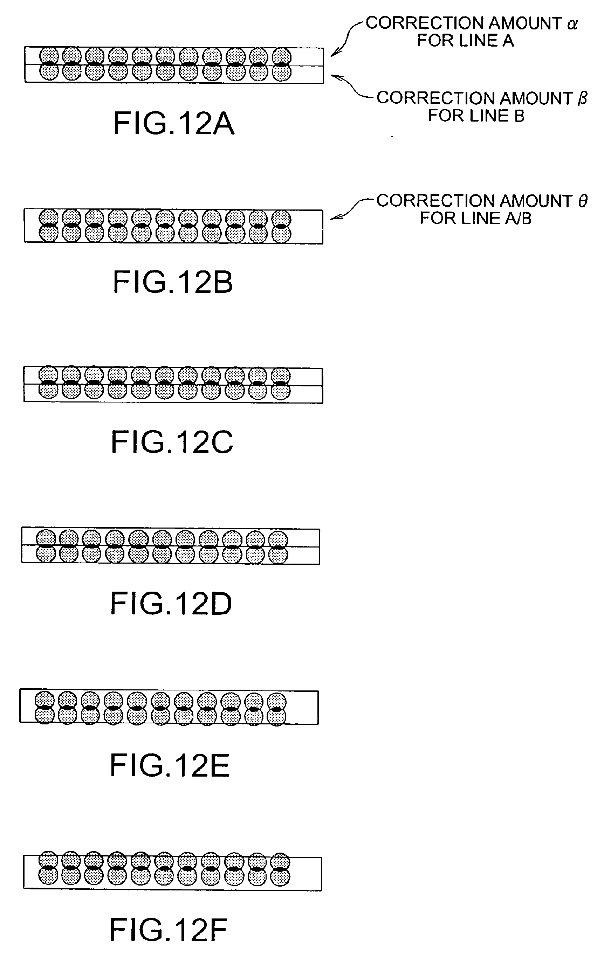

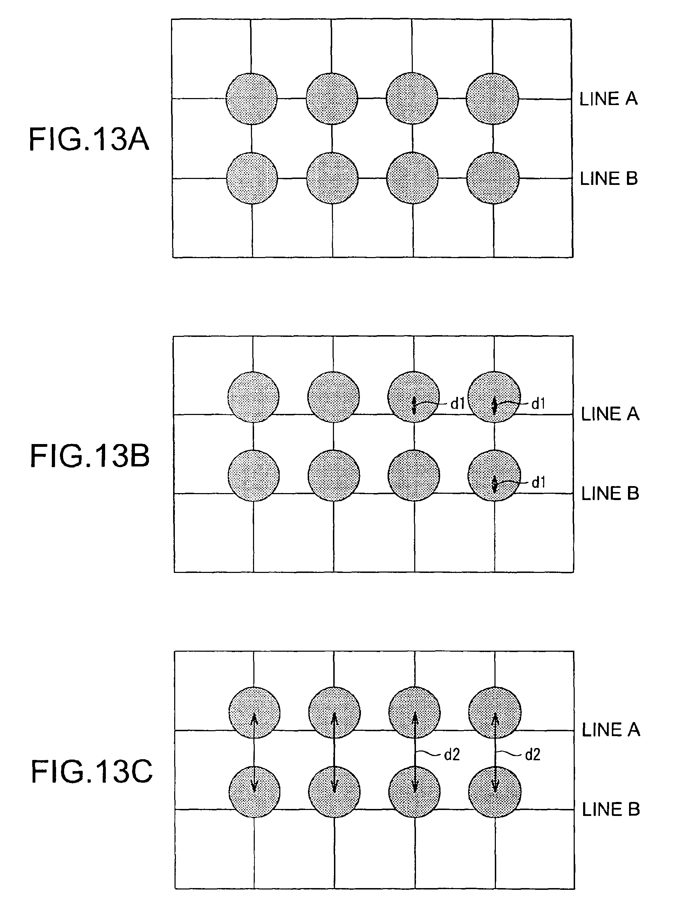

The effectiveness of density measurement paying attention to the dot forming state of two adjacent nozzles of the printing head 200 will be described in detail below with reference to Figs. 12A to 12F and Figs. 13A to 13C.

Fig. 12A is a diagram illustrating an example of a density correcting method according to the related art, and Fig. 12B is a diagram illustrating a density correcting method according to the invention. Figs. 12C and 12D are diagrams illustrating an example of a density measuring method according to the related art. Figs. 12E and 12F are diagrams illustrating an example of a density measuring method according to the invention. Fig. 13A is a diagram illustrating an ideal dot forming state when paying attention to a nozzle A and a nozzle B, and Fig. 13B is a diagram illustrating an example of a method of measuring the degree of ink deflection according to the related art when the same ink deflection phenomenon occurs in the nozzle A and the nozzle B. Fig. 13C is a diagram illustrating a method of measuring the degree of ink deflection according to the invention when the same ink deflection phenomenon occurs in the nozzle A and the nozzle B.

For example, density correction by a known HS method is performed by correcting the pixel value of the pixel corresponding to each nozzle on the basis of, for example, density information of a dot formed by each nozzle of the printing head. That is, as shown in Fig. 12A, the pixel value of a pixel corresponding to a nozzle A is corrected on the basis of a correction amount α corresponding to the density characteristic of the nozzle A for forming a dot corresponding to the pixel of a line A, and the pixel value of each pixel of a line B corresponding to a nozzle B is corrected on the basis of a correction amount β corresponding to the density characteristic of the nozzle B for forming a dot corresponding to the pixel of the line B.

However, as can be seen from Fig. 12A, the ink deflection phenomenon occurs in the nozzle B, and a portion of the dot of the line B overlaps the dot of line A, causing the "dark stripe". In a case in which the banding phenomenon occurs due to the ink deflection phenomenon, when correction is performed by the HS method, each pixel value is corrected in the correction amount generated for every nozzle without considering a density variation of the overlapping portion by the ink deflection phenomenon, which makes it difficult to effectively remove the "dark stripe" and the "white stripe" caused by the banding phenomenon or to make the "dark stripe" and the "white stripe" less noticeable. In the worst case, the "dark stripe" and the "white stripe" are made more noticeable. This is similarly applied to the "white stripe" caused by the larger gap between the line A and the line B than a predetermined gap.

In contrast, according to the invention, it is possible to generate a correction amount in consideration of a density variation of the overlapping portion, by generating a correction amount paying attention to the dot forming state (printing state) of two adjacent nozzles. In addition, it is possible to correct the pixel values of pixels corresponding to the two nozzles on the basis of the generated correction amount, and it is also possible to effectively remove the "dark stripe" and the "white stripe" caused by the banding phenomenon or to make the "dark stripe" and the "white stripe" less noticeable.

Next, a description will be made of problems of a known method of measuring the density of each pixel and determining the correction amount thereof when the density of the dot formed by each nozzle of the printing head 200 is previously measured and a correction amount is determined on the basis of the measured density.

In the related art, for example, an optical reading apparatus, such as a scanner, reads out the printing result, and dots corresponding to a line of nozzles are cut away on the basis of the read data. Then, the densities of the dots are measured, and a correction amount for each nozzle is determined on the basis of the measured density. However, as shown in Figs. 12C and 12D, in a case in which the ink deflection phenomenon occurs in one of two adjacent nozzles and the dot forming position deviates from an ideal forming position, causing two dots to overlap each other, when the cut away position of each line is determined, some of the dots belong to one line determine the position of the dot belonging to another line as the cut away position, which makes it difficult to accurately measure the density of the dot formed by each nozzle and to determine a correction amount for correcting the pixel value of a pixel corresponding to each nozzle.

Meanwhile, as in the invention, when the densities of two adjacent nozzles are measured and the correction amounts thereof are determined, as shown in Figs. 12E and 12F, it is preferable to determine the cut away positions of two lines corresponding to two nozzles. Since the "dark stripe" or the "white stripe" occurs between two lines, high cut away accuracy for each nozzle is not strongly demanded, and thus it is possible to easily determine the cut away position completely including density information of the "dark stripe" or the "white stripe". Therefore, it is possible to easily determine a correction amount capable of accurately correcting the pixel value of a pixel corresponding to each nozzle.

Next, the problem of a known method of correcting each nozzle causing the ink deflection phenomenon will be described.

Fig. 13A shows a dot pattern when the nozzles A and B form dots at the ideal dot forming positions. However, as shown in Fig. 13B, when the nozzles A and B cause the ink deflection phenomenon in the same direction and in the same amount of ink deflection, the dot forming positions of the nozzles A and B deviate from the ideal dot forming positions, but the positional relationship between the dots formed by the nozzles A and B does not vary. That is, as paying attention to only a dot pattern formed by the two nozzles, the same printing result as that at the ideal forming position shown in Fig. 13C is obtained. In this case, as shown in Fig. 13B, a distance d1 between the ideal dot forming position and the actual dot forming position (the central position of a dot) is determined, and the pixel value of a pixel corresponding to each nozzle is corrected by a correction amount determined corresponding to the amount of ink deflection, which is the distance d1. In this case, correction is also performed on the pixel value of the pixel having the normal printing result, which causes the deterioration of printing quality, such as the occurrence of the banding phenomenon in the pixel having the normal printing result, in the worst case.

Meanwhile, as in the invention, in the method of performing correction paying attention to the dot forming positions of two adjacent nozzles, as shown in Fig. 13C, even when the nozzle A and the nozzle B cause the ink deflection phenomenon in the same direction and in the same amount of ink deflection, it is possible to measure a distance d2 between the centers of two dots and to correct the pixel value of a pixel corresponding to each nozzle on the basis of a correction amount determined according to the amount of ink deflection corresponding to the difference between the measured distance d2 and an ideal distance between the dots. Therefore, when the relative positional relationship between the dots formed by two nozzles is the ideal positional relationship (or within a predetermined error range), correction is not performed on the pixel value of the pixel, and thus appropriate correction can be performed on necessary portions, which makes it possible to effectively remove the "dark stripe" and the "white stripe" due to the banding phenomenon or to make the "dark stripe" and the "white stripe" less noticeable.

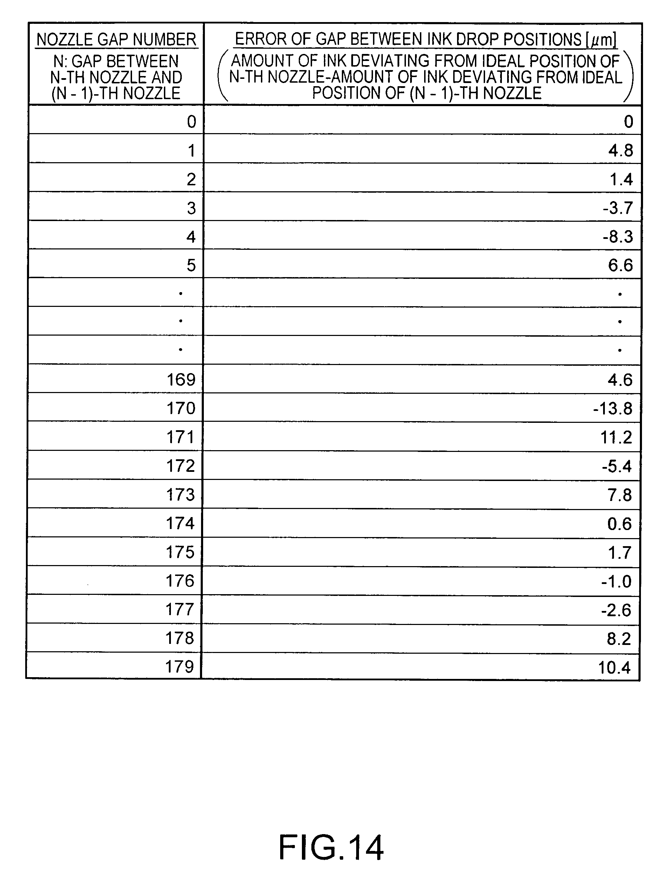

Next, an example of a method of generating a correction amount corresponding to the dot forming state of two adjacent nozzles of the printing head 200 will be described with reference to Figs. 14 to 16.

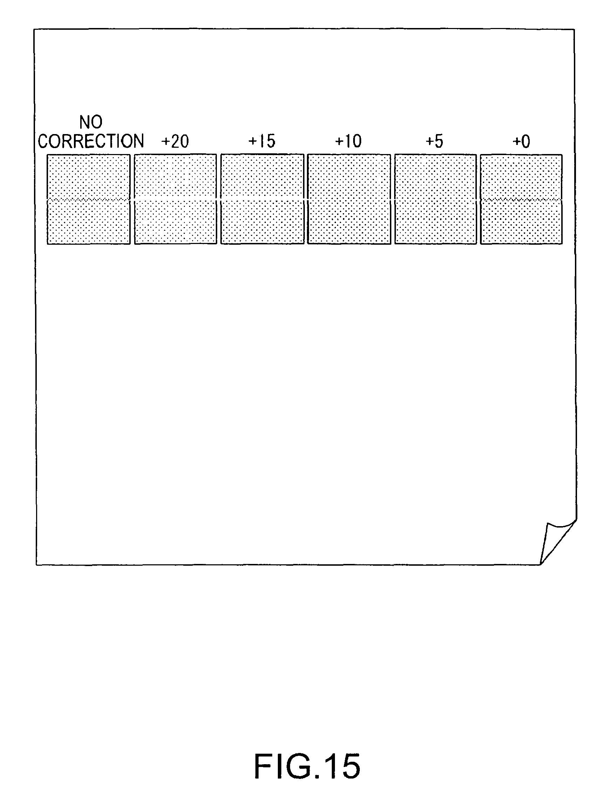

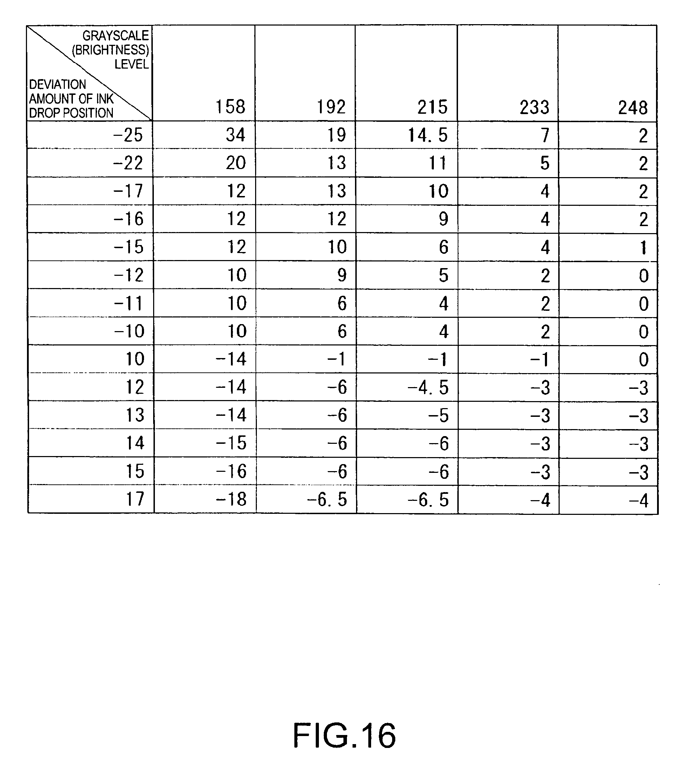

Fig. 14 is a diagram illustrating an example of a printing state information table. Fig. 15 is a diagram illustrating an example of the result of correction for an error of an ink ejection gap. Fig. 16 is a diagram illustrating an example of a correction amount information table.

In this embodiment, the printing state information storage unit 12 stores, as printing state information, a data table including the error of an ink ejection gap between two nozzles, that is, a gap between dots formed by the two nozzles (a distance between the centers of the dots), with respect to an ideal ink ejection gap between the two nozzles, as shown in Fig. 14. In Fig. 14, for example, a nozzle gap number 170 corresponds to an ink ejection gap between a nozzle N170 and a nozzle N171. Hereinafter, an example of a method of creating a correction amount on the basis of the printing state information will be described.

First, several errors of ink ejection gaps are assumed, and printing samples obtained by intentionally generating a deviation in the ink drop positions by the assumed errors are prepared with respect to several grayscale levels. The samples are also prepared with respect to a plurality of grayscale levels. An optimum correction amount for a grayscale close to black or white that is invisible as a stripe is different from an optimum correction amount for an intermediate grayscale that is visible as a stripe even though deviation amounts are equal to each other. Therefore, in this embodiment, an intermediate grayscale region that is visible as a stripe is divided on the basis of a y characteristic of a printer, and thus the samples have five grayscale levels (input pixel values (brightness values) 158, 192, 215, 233, and 248). Since the grayscales close to black and white (input pixel values 0, 57, and 255) have the highest level and zero level, the grayscale levels are excluded. Then, correction is performed on the prepared samples on the basis of correction amounts, and a correction amount allowing a stripe to be invisible is determined as a correction amount for the deviation amount. Since most of the nozzles of the printing head 200 generally cause the ink deflection phenomenon a little, most of the dots printed by these nozzles generally deviate from the ideal printing positions a little. Therefore, a predetermined threshold value (for example, about several micrometers) is set to the error, and a process of determining a correction amount is not performed in the range in which correction is not needed (the range in which the white stripe and the dark stripe are invisible), on the basis of the threshold value, so that "0" may be set.

Fig. 15 schematically illustrates that, when a certain deviation amount of ink drop position intentionally occurs at a certain grayscale level, the dark stripe occurs (no correction in Fig. 15), and the pixel values of the pixels corresponding to two lines that cause the dark stripe are corrected for every correction amount of +5 in the correction amount range of +0 to +20 (a symbol + means an increase in the pixel value (brightness value). As a result, the dark stripe disappears in the correction amount of +10. As can be seen from Fig. 15, when the correction amount is smaller than +10 (+5 and +0), an increase in brightness is insufficient, causing the dark stripe to remain. When the correction amount is larger than +10 (+15 and +20), the brightness excessively increases, causing the dark stripe to be changed to the white stripe.

In this way, correction is performed on the grayscale levels of two nozzles and the deviation amount of an ink drop position on the basis of several correction amounts, and a correction amount allowing a stripe to be invisible is selected. Therefore, it is possible to create the correction amount information table shown in Fig. 16. Whether a stripe is visible or invisible may be determined by the naked eye, or it may be automatically determined by previously setting the threshold value of a density difference obtained by, for example, experiments, that allows the stripe to be invisible and by comparing the threshold value with the density difference after correction by using a computer.

In the correction amount information table shown in Fig. 16, the deviation amount of the ink drop position is the difference (error) between the ideal dot gap of two nozzles and a gap between dots formed by two adjacent nozzles, and the grayscale level is the input pixel value (brightness value). That is, the correction amount information table is created by registering the correction amounts, the deviation amounts of ink drop positions, and the grayscale levels, with the correction amount associated with the deviation amount of ink drop positions and the grayscale levels. Therefore, since the deviation amounts of the ink drop positions of two nozzles are found from the printing state information table and the pixel values of pixels corresponding to the two nozzles are found from image data and information of the printing head 200, it is possible to acquire a correction amount for correcting the pixel values of the pixels corresponding to the two nozzles from the correction amount information table.

In this embodiment, the created correction amount information table is stored in the correction amount information storage unit 14. More specifically, since the correction amount information table shown in Fig. 16 is a data table including representative input pixel values and the deviation amounts of ink drop positions, it is necessary to perform interpolation on input pixel values and the deviation amount of ink drop positions not registered in the table.

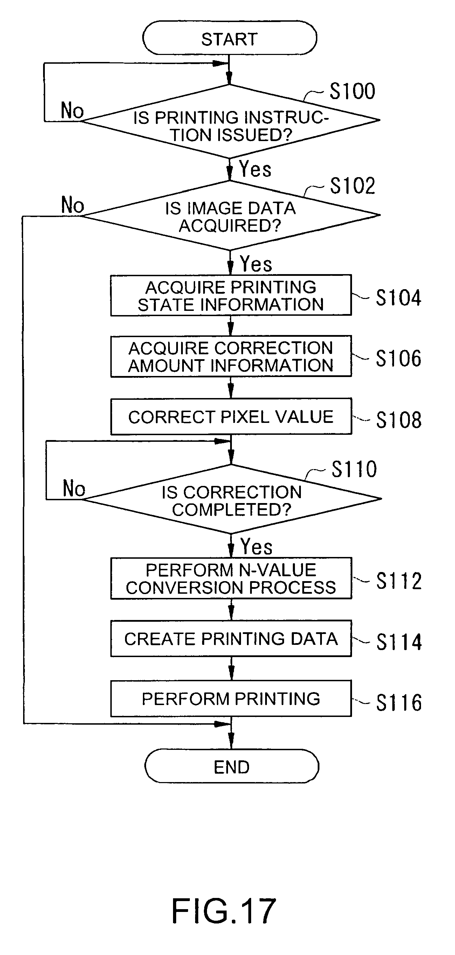

Next, an example of the flow of a printing process using the printing apparatus 100 having the above-mentioned structure will be described with reference to a flow chart shown in Fig. 17. Fig. 17 is a flow chart illustrating an example of a printing process.

The printing head 200 for printing dots in the above-described manner can print dots having plural kinds of colors, for example, four colors or six colors at the same time. However, for the purpose of simplicity of explanation, in the following description, it is assumed that the printing head 200 prints all dots in one color (a single color) (monochromatic image).

As shown in the flow chart of Fig. 17, first, the printing apparatus 100 proceeds to a first step S100 after power is supplied and then a predetermined initial operation for a printing process is completed. When a printing instruction terminal (not shown), such as a personal computer, is connected, the image data acquiring unit 10 monitors whether the printing instruction terminal issues a clear printing instruction. When the image data acquiring unit 10 determines that the printing instruction is issued (Yes), the process proceeds to the next step S102 to determine whether multi-valued image data to be printed is transmitted from the printing instruction terminal together with the printing instruction. When it is determined that the multi-valued image data is not transmitted (No), the determining process is repeatedly performed until the printing instruction is issued.

In step S102, when the image data acquiring unit 10 determines that the image data is not transmitted after predetermined time has elapsed (No), the process ends. On the other hand, when the image data acquiring unit 10 determines that the image data is transmitted within predetermined time (Yes), the process proceeds to step S104.

When the image data acquired by the image data acquiring unit 10 is multi-valued RGB data, the image data is converted into multi-valued CMYK data corresponding to ink used, on the basis of a predetermined conversion algorithm as described above.

In step S104, the correction amount calculating unit 16a of the pixel value correcting unit 16 reads the printing state information table from the printing state information storage unit 12 and stores the read printing state information table in a predetermined area of the RAM 62. In this way, the correction amount calculating unit 16a acquires printing state information. Then, the process proceeds to step S106.

In step S106, the correction amount calculating unit 16a of the pixel value correcting unit 16 reads the correction amount information table from the correction amount information storage unit 14 and stores the read correction amount information table in a predetermined area of the RAM 62. In this way, the correction amount calculating unit 16a acquires correction amount information. Then, the process proceeds to step S108.

In step S108, the correction amount calculating unit 16a and the pixel value correcting unit 16b of the pixel value correcting unit 16 calculate the correction amounts corresponding to the pixel values in the image data acquired in step S102, on the basis of the printing state information table acquired in step S104 and the correction amount information table acquired in step S106, and perform a pixel value correcting process of correcting the pixel values on the basis of the calculated correction amounts. Then, the process proceeds to step S110.

In step S110, the N-value conversion data creating unit 18 determines whether the correction amount calculating unit 16a and the pixel value correcting unit 16b have completed the pixel value correcting process. When it is determined that the pixel value correcting process is completed (Yes), the process proceeds to step S112. On the other hand, when it is determined that the pixel value correcting process is not completed (No), the determining process is repeatedly performed until the pixel value correcting process is completed.

In step S112, the N-value conversion data creating unit 18 performs an N-value conversion process for every pixel according to the image data having the corrected pixel values, on the basis of the dot/grayscale conversion table 300A shown in Fig. 6, to create N-value conversion data. Then, the process proceeds to step S114. In the N-value conversion process, it is possible to create N-value conversion data faithful to the original image data by using a known intermediate grayscale method, such as an error diffusion method or a dither method.

In step S114, the printing data creating unit 20 allocates a dot having a size corresponding to an N value to every pixel according to the N-value conversion data created in step S112, on the basis of the dot/grayscale conversion table 300A shown in Fig. 6, to create printing data. Then, the process proceeds to step S116.

In step S116, the printing unit 22 performs a printing process on the basis of the printing data created in step S114, and ends the process.

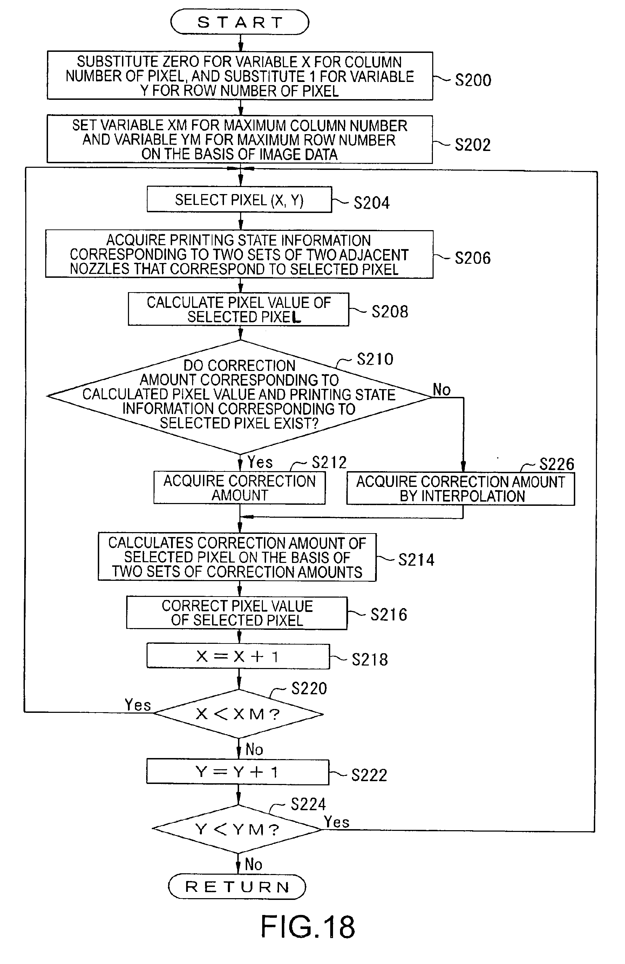

Next, an example of the flow of the pixel value correcting process performed in step S108 will be described with reference to a flow chart shown in Fig. 18. Fig. 18 is a flow chart illustrating an example of the pixel value correcting process performed by the pixel value correcting unit 16.

When the pixel value correcting unit 16 starts the pixel value correcting process, step S200 is performed. In step S200, the correcting amount calculating unit 16a substitutes zero into a variable X for managing a pixel column number and 1 into a variable Y for managing a pixel row number. Then, the process proceeds to step S202. In step S202, the reason why a value of 1 is substituted into the variable Y is that, in this embodiment, two nozzles arranged at the edge of each nozzle module of the printing head 200 are not considered when the same printing head 200 scans a printing medium plural times to print one image. That is, a combination of a nozzle N180 and a nozzle N1 is not considered.

In step S202, the correction amount unit 16a sets a management variable XM of the largest column number and a management variable YM of the largest row number from the size of the corresponding image data. Then, the process proceeds to step S204.

In step S204, the correction amount calculating unit 16a selects a pixel (X, Y) of the image data, and then the process proceeds to step S206.

In step S206, the correcting amount calculating unit 16a acquires printing state information corresponding to the nozzle gap numbers of two sets of nozzles, each set composed of two nozzles, corresponding to the pixel (X, Y) selected in step S204 from the printing state information table stored in a predetermined area of the RAM 62. Then, the process proceeds to step S208. In this embodiment, as shown in Fig. 14, two combinations of two nozzles exist for a nozzle number N such that nozzle gap No. 2 is a gap between a nozzle N2 and a nozzle N3, and nozzle gap No. 3 is a gap between the nozzle N3 and a nozzle N4. Therefore, printing state information on two sets of nozzles, each set composed of two nozzles, is acquired for the selected pixel.

In step S208, the correction amount calculating unit 16a calculates the pixel value of the selected pixel on the basis of the pixel value of the selected pixel and the pixel values of pixels around the selected pixel. Then, the process proceeds to step S210. In step S210, when only the selected pixel is black and the pixels around the selected pixel are white, the pixels having a predetermined area, including the selected pixel, appear to be white. Therefore, the process of calculating the pixel value of the selected pixel is performed to appropriately correct the above-mentioned phenomenon. That is, the average value of the pixel value of the selected pixel and the pixel values of the peripheral pixels is calculated as the pixel value of the selected pixel.

In step S210, the correction amount calculating unit 16a determines whether a correction amount corresponding to the pixel value calculated in step S208 and printing state information corresponding to the selected pixel exist in the correction amount information table stored in a predetermined area of the RAM 62. When it is determined that the printing state information and the correction amount exist in the correction amount information table (Yes), the process proceeds to step S212. On the other hand, when it is determined that the printing state information and the correction amount does not exist in the correction amount information table (No), the process proceeds to step S226. In this case, even when a correction amount corresponding to only one of two sets exists, the correction amount is acquired, and the process proceeds to step S226.

In step S212, the correction amount calculating unit 16a acquires the correction amount from the correction amount information table, and then the process proceeds to step S214.

In step S214, on the basis of the acquired two sets of correction amounts, the correction amount calculating unit 16a calculates a correction amount considering the two sets of correction amounts, and then the process proceeds to step S216. In this case, it is preferable to select a correction amount calculating method capable of effectively calculating a correction amount enabling a stripe to be effectively removed or to be invisible by using the sum of two sets of correction amounts as a correction amount or by using the average of two sets of correction amounts as a correction amount.

In step S216, the pixel value correcting unit 16b corrects the pixel value of the selected pixel (X, Y) on the basis of the correction amount calculated in step S214, and then the process proceeds to step S218. In this embodiment, the pixel value is corrected by adding the calculated correction amount to the pixel value of the selected pixel. That is, correction is performed such that when the symbol of the correction amount is "+", the pixel value increases, and when the symbol of the correction amount is "-", the pixel value decreases.

In step S218, the correction amount calculating unit 16a adds 1 to the variable X, and then the process proceeds to step S220.

In step S220, the correction amount calculating unit 16a determines whether the variable X is smaller than the value XM. When it is determined that the variable X is smaller than the value XM (Yes), the process proceeds to step S204. On the other hand, when it is determined that the variable X is larger than the value XM (No), the process proceeds to step S222.

In step S222, the correction amount calculating unit 16a adds 1 to the variable Y for managing a row number, and then the process proceeds to step S224.

In step S224, the correction amount calculating unit 16a determines whether the variable Y is smaller than the value YM. When it is determined that the variable Y is smaller than the value YM (Yes), the process proceeds to step S204. On the other hand, when it is determined that the variable Y is larger than the value YM (No), a series of processes ends, and then the pixel value correcting process returns to the original process.

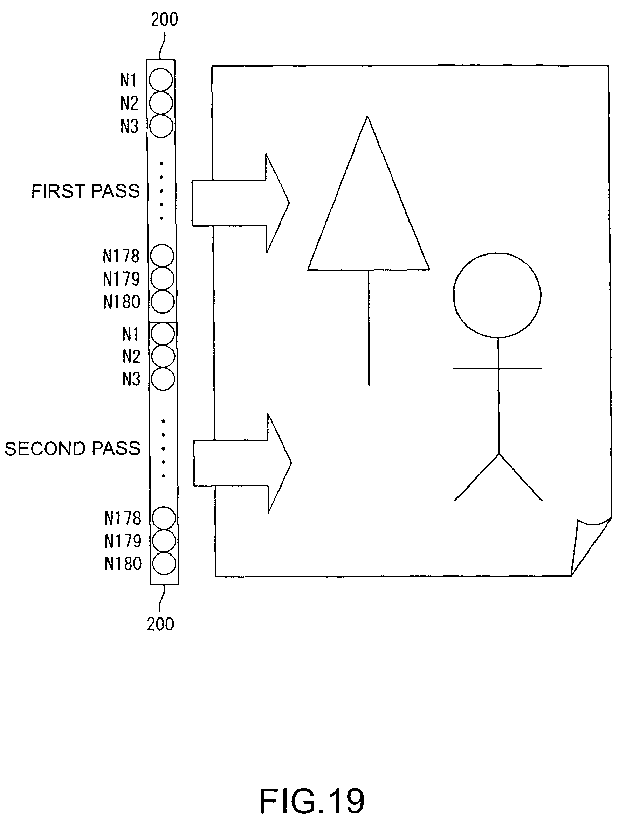

Next, the operation of this embodiment will be described with reference to Figs. 19 to 22.

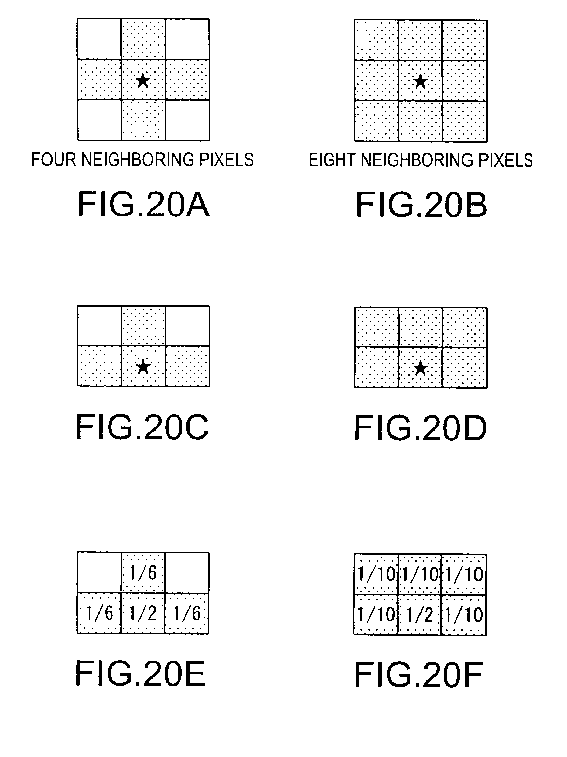

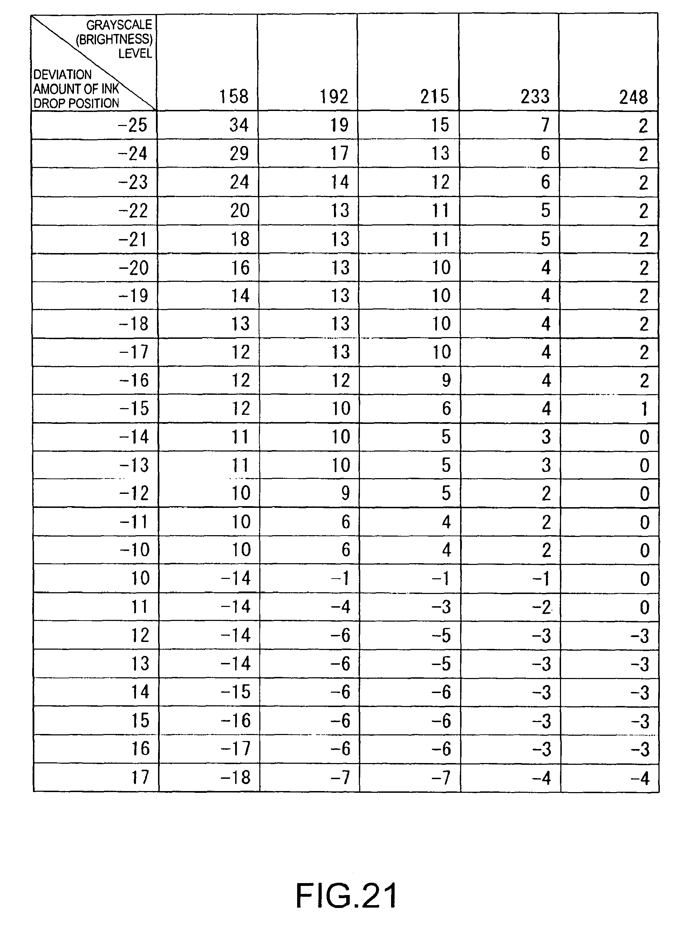

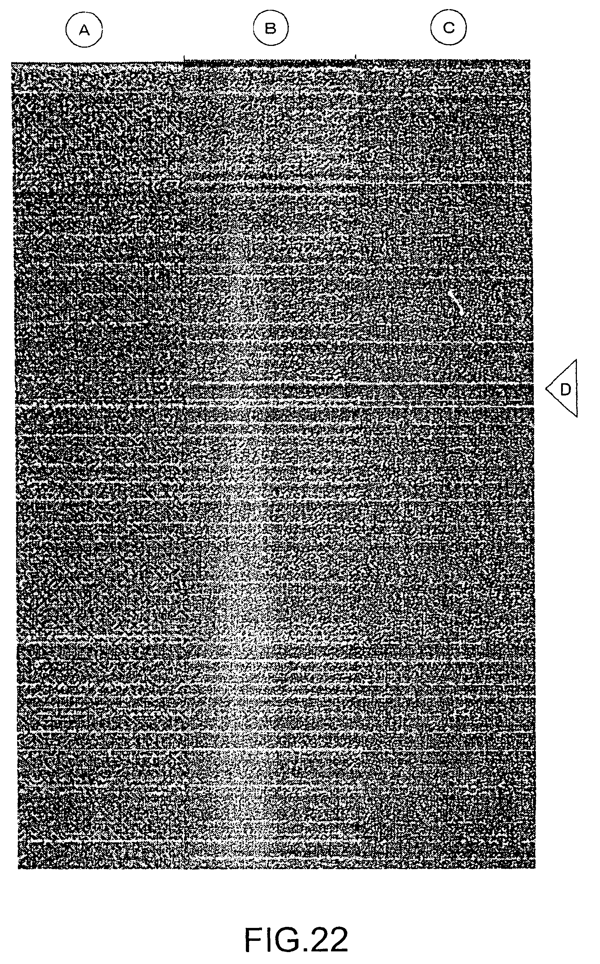

Fig. 19 is a diagram illustrating an example of a printing process when the printing head 200 scans a sheet two times to print an image. Figs. 20A to 20F are diagrams illustrating the selection of peripheral pixels when the pixel value of the selected pixel is determined on the basis of the pixel values of the peripheral pixels. Fig. 21 is a diagram illustrating an example of the interpolation of a correction amount. Fig. 22 is a diagram illustrating the effects of the invention.

The printing apparatus 100 acquires image data ("Yes" in step S102) and acquires printing state information and correction amount information (steps S104 and S106). Then, the printing apparatus 100 performs the pixel value correcting process (step S108).

When the pixel value correcting process starts, zero is substituted into the variable X for managing a column number, and 1 is substituted into the variable Y for managing a row number (step S200). The maximum values are set to the management variable XM having the largest column number and the management variable YM having the largest row number on the basis of image data (step S202). When image data has a size of 360 pixels by 240 pixels, 360 is substituted into the value XM as the maximum value, and 240 is substituted into the value YM as maximum value. When the maximum values are set, the pixel (X, Y) is selected (step S204). At this point in time, a pixel (0, 1) is selected, but with the progress of processing, a pixel (0, 170) is eventually selected.

Two nozzle gap numbers 170 and 171 correspond to the pixel (0, 170). That is, a gap between dots formed by a nozzle N170 and a nozzle N171 and a gap between dots formed by the nozzle N171 and a nozzle N172 are acquired from the printing state information table (step S206), in which the nozzle N 171 corresponding to a column number Y = 170 of image data is common. Referring to the printing state information table shown in Fig. 14, since "-13.8 µm" is registered for the nozzle gap number 170 and "11.2 µm" is registered for the nozzle gap number 171, information thereof is acquired. As shown in Fig. 19, in the printing apparatus 100 according to this embodiment, the printing head 200 scans a recoding medium two times in the one pass to perform printing. Therefore, the printing head 200 performs a second scanning on image data Y = 181 to 359, similar to a first scanning to perform printing, and thus printing state information is the same as that of the pixels (0, 1) to (239, 179). Accordingly, it is preferable to correct the pixel values of pixels corresponding to the second scanning by using the calculated correction amount.

Then, the pixel value used for the selection of the correction amount is calculated on the basis of the pixel value of the selected pixel (0, 170) and the pixel values of the peripheral pixels of the selected pixel (step S208). As shown in Figs. 20A to 20F, the peripheral pixels are selected by various methods. Fig. 20A shows a method of selecting four pixels around the selected pixel, that is, upper, lower, right and left pixels, as the peripheral pixels. Fig. 20B shows a method of selecting eight pixels around the selected pixel as the peripheral pixels. The eight pixels include the four pixels shown in Fig. 20A and the other four pixels adjacent to the four pixels. Fig. 20C shows a method of selecting three pixels around the selected pixel from two lines corresponding to selected two nozzles, and Fig. 20D shows a method of selecting five pixels around the selected pixel from the two lines corresponding to the selected two nozzles. Figs. 20C and 20D correspond to pixels corresponding to two nozzles for printing a line including the selected pixel and a previous line. However, as in the invention, when correction amounts corresponding to two nozzles for printing a line including the selected pixel and the next line are needed, a method of selecting peripheral pixels from the line including the selected pixel and the next line is also effective (not shown). The pixel value of the selected pixel is calculated by calculating the average value on the basis of the peripheral pixels selected by any one of the above-mentioned selecting methods. For example, in the selecting method shown in Fig. 20C, when the pixel value of the selected pixel is "158" and all the pixel values of three peripheral pixels are "255", for example, the average of these values, "(158 + 255 + 255 + 255)/4 = 230.75", is calculated as the pixel value of the selected pixel.

Meanwhile, the pixel value of the selected pixel may be determined by the following method: as shown in Figs. 20E and 20F, weight coefficients are previously set to the selected pixel and the peripheral pixels; the pixel value of the selected pixel and the pixel values of the peripheral pixels are multiplied by the weight coefficients; and the total sum of the multiplied values is calculated. For example, in the selecting method shown in Fig. 20E, when the pixel value of the selected pixel is "158" and all the pixel values of three peripheral pixels are "255", the sum of values multiplied by weight coefficients "79 + 42.5 + 42.5 + 42.5 = 206.5", is calculated as the pixel value of the selected pixel.

When the pixel value of the selected pixel is calculated in this way, it is determined whether corresponding correction amounts are registered from the pixel value and the acquired two printing state information items, with reference to the correction amount information table shown in Fig. 16. Since the acquired printing state information items are "-13.8 µm" and "11.2 µm", it is determined that the correction amounts are not registered in the correction amount information table ("No" in step S210). Therefore, in this embodiment, "-13.8 µm" and "11.2 µm" is rounded up to become "-14 µm" and "11 µm", correction amounts corresponding to the values are calculated by interpolation, and the correction amounts are acquired from information registered in the correction amount information table (step S226).

Next, an example of interpolation of the deviation amount of ink drop positions "-24 µm" and "-23 µm" at the grayscale levels "158" of the selected pixel will be described below. As shown in Fig. 16, since values closest to the above-mentioned values are "-25 µm" and "-22 µm", the following calculation can be performed by a linear interpolation. That is, the correction amount of the grayscale levels "158" and the deviation amount of ink drop position "-23 µm" can be calculated as follows: "20 + [(34 - 20) / 3] × 1 = 24.67. The correction amount of the grayscale levels "158" and the deviation amount of ink drop position "-24 µm" can be calculated as follows: "20 + [(34 - 20) / 3] × 2 = 29.33.

It is possible to obtain a correction amount information table shown in Fig. 21 by performing the same linear interpolation as described above on non-registered values, such as "-14 µm" and "11 µm".

In this embodiment, for the purpose of simplicity, all decimals are omitted. Actually, information including decimals may be stored. The deviation amounts of ink drop positions and the grayscale levels are represented by integral numbers. However, when the overall accuracy of the system is improved, information items represented by decimals may be stored.

Although interpolation for the deviation amount of an ink drop position has been described above, interpolation for the grayscale direction can be performed similarly. The interpolation for the grayscale direction and the interpolation for the deviation amount of an ink drop position may be performed in this order.

When the correction amount information table shown in Fig. 16 is obtained as basic information, insufficient information may be obtained by interpolation and it may be stored as an expanded table. As in this embodiment, during the operation of the system, when information search is required at any time, values obtained by interpolation from the correction amount information table shown in Fig. 16, which is the basic information, may be returned. In this way, it is possible to save storage capacity and to retrieve the deviation amounts of ink drop positions and grayscale levels with decimals.

From the correction amount information table shown in Fig. 21, correction amounts corresponding to "-14 µm" and "11 µm" are "11" and "-14", respectively.

When correction amounts for two adjacent nozzles corresponding to the selected pixel (0, 170) are acquired in this way, the correction amount of the selected pixel is calculated on the basis of these correction amounts (step S214). The correction amount can be calculated, considering the banding phenomenon caused by the ink deflection phenomenon of the nozzles 170 and 171 as well as the nozzles 171 and 172, by using a value (11 - 14 = -2) obtained by adding these two correction amounts as the correction amount of the selected pixel or by using, as the correction amount of the selected pixel, a value ((11 - 14) / 2 = -1) obtained by adding these two correction amounts and by calculating the average thereof.

When the correction amount of the selected pixel (0, 170) is calculated, the correction amount is added to the pixel value "158" of the selected pixel, thereby correcting the pixel value (step S216). That is, the calculated correction amount "-2" or "-1" is added to the pixel value "158" of the selected pixel. In this way, the pixel value of the selected pixel is corrected to one of two values "156" and "157".

When the pixel value of the selected pixel is completely corrected, steps S218 to S220 are performed to add 1 to the variable X for managing a column number, thereby selecting a pixel (1, 170). When the variable X is larger than 239, steps S222 to S224 are performed to add 1 to the variable Y for managing a row number, thereby selecting a pixel (0, 171).

The pixel value correcting process is performed on pixels having row numbers 1 to 359 and column numbers 0 to 239 of image data. When the variable Y for managing a row number is 359 and thus end conditions are satisfied ("No" in step S224), the pixel value correcting process ends.

When the pixel value correcting process ends, the N-value conversion data creating unit 18 creates N-value conversion data from image data after the pixel value correcting process (step S112). The printing data creating unit 20 associates N values with information on the dot sizes and whether the dots exist, on the basis of the N-value conversion data, to create printing data (step S114).

When the printing data is created, the created printing data is output to the printing unit 22. Then, the printing unit 22 performs printing on the basis of the printing data (step S116).

The printing result when the correcting process of the invention is performed, the printing result when no correcting process is performed, and the printing result when an approximate correcting process is performed by a known HS method are compared with one another on the basis of Fig. 22.

In Fig. 22, a character "A" indicates the printing result when the correcting process of the invention is performed. The character "A" shows the printing result obtained by measuring the relative deviation between ink drop positions of two adjacent nozzles and correcting the pixel values of the pixels corresponding to the two nozzles with a common correcting amount to the two nozzles. The printing results shown in Fig. 22 are obtained when the relative deviation between ink drop positions is larger than 10 µm and smaller than -10 µm and correction is performed only on a portion where the magnitude of positional deviation is large. Therefore, stripes remain in the printed matter.

A character "B" in Fig. 22 indicates the printing result when no correcting process is performed on the pixel values.

A character "C" in Fig. 22 indicates the printing result obtained by measuring the density of each line using the printing result B as a sample by means of a method similar to the existing HS method and by correcting excess or deficiency of the density of each line.

Paying attention to a part D in Fig. 22, stripes exist in the printing result C, but no stripes exist in the printing result A. That is, it is difficult to perform correction on the portion in which the magnitude of the deviation between ink drop positions is large by the existing method, as in the printing result C. However, the correcting method of the invention can perform correction on the portion in which the magnitude of the deviation between ink drop positions is large.

The technique disclosed in JP-A-2004-58282 is an improved method of that used for the printing result C of Fig. 22. However, as long as correction is performed on one line, as described above, the technique has a structural problem in that stripes caused by the deviation between ink drop positions are greatly affected by noise at the time of measurement.

In this way, the printing apparatus 100 according to the invention has the error of the gap between dots formed by two adjacent nozzles among the nozzles of the printing head 200 with respect to the ideal gap between dots as printing state information and a correction amount created considering the relationship between two lines printed by the two nozzles as correction amount information. The printing apparatus 100 corrects the pixel values of pixels corresponding to the two nozzles on the basis of the printing state information and the correction amount information, which causes ink deflection. Therefore, when the ink deflection phenomenon occurs to cause the deviation between ink drop positions, it is possible to correct the pixel values of pixels with an appropriate correction amount, which makes it possible to effectively remove dark stripes and white stripes due to the banding phenomenon caused by the ink deflection phenomenon or to make the dark stripes and the white stripes less noticeable.

In this embodiment, the printing head 200 corresponds to a printing head of a printing apparatus, and the image data acquiring unit 10 corresponds to an image data acquiring unit of the printing apparatus. In addition, the pixel value correcting unit 16, the N-value conversion data creating unit 18, and the printing data generating unit 20 correspond to a pixel value correcting unit, an N-value conversion data creating unit, and a printing data creating unit of the printing apparatus or an image processing apparatus, respectively. The printing unit 22 corresponds to a printing unit of the printing apparatus.

In this embodiment, steps S100 to S102 correspond to an image data acquiring step of a printing method or an image processing method, and steps S104 to S108 correspond to a pixel value correcting step of the printing method or the image processing method. Further, steps S110 to S112 correspond to an N-value conversion data creating step of the printing method or the image processing method. Step S114 corresponds to a printing data creating step of the printing method or the image processing method, and step S116 corresponds to a printing step of the printing method.

In the above-described embodiment, the printing state information of a nozzle corresponding to the selected pixel and the correcting amount corresponding to the pixel value of the selected pixel are acquired from the correction amount information table, or when the corresponding correction amount is not registered in the correction amount information table, the correction amount is calculated by interpolation and is then acquired from the correction amount information table. However, the invention is not limited to the above-described embodiment. For example, when one of the printing state information or the pixel value of the selected pixel is input, a function (approximate expression) for outputting a corresponding correction amount may be created from information previously prepared, such as information registered in the correction amount information table, and the basic expression of the function and a coefficient table may be stored as correction amount information.

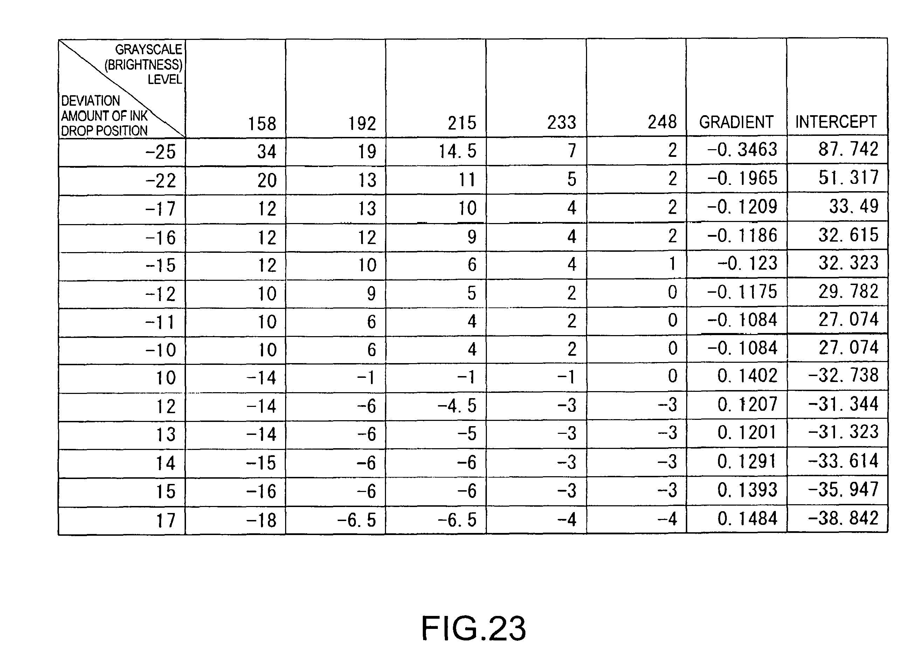

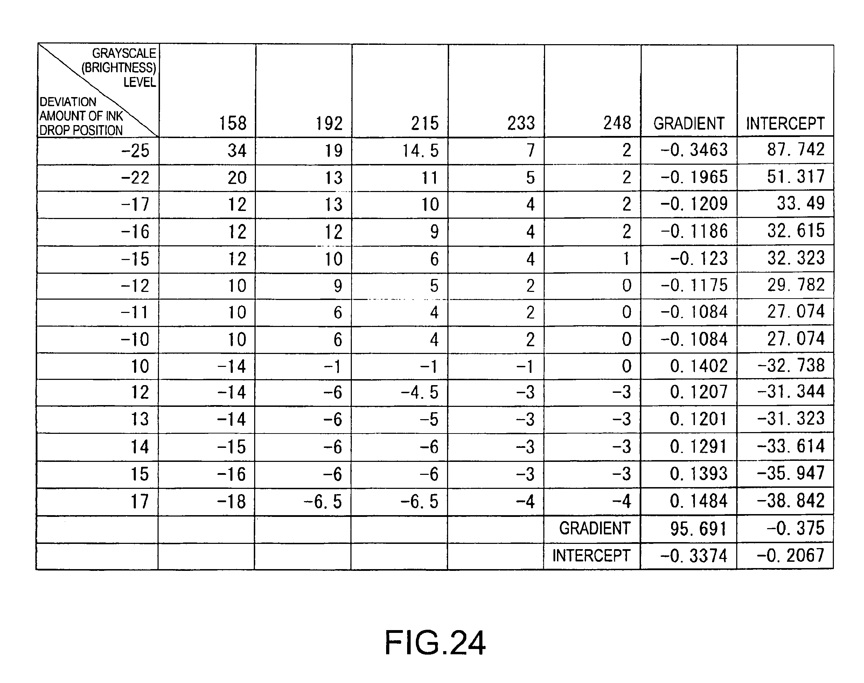

An example in which information of a function for calculating a correction amount is used as the correction amount information will be described with reference to Figs. 23 and 24. Fig. 23 shows an example in which information of a function for calculating correction amounts from pixel values is used as the correction amount information. Fig. 24 shows an example in which information of a function for calculating a gradient and an intercept of the function of Fig. 23 is used as the correcting amount information.

More specifically, Fig. 23 shows an example in which information of a function of outputting a correction amount corresponding to every deviation amount of an ink drop position when an input pixel value (brightness value) is input is used as the correction amount information. In Fig. 23, a linear function "y = a * X + b" is used as a basic expression, and a gradient "a" and an intercept "b" of the basic expression are created for every deviation amount of an ink drop position, on the basis of the information of the correction amount information table previously prepared by, for example, experiments. For example, as can be seen from Fig. 23, the gradient a and the intercept b of the deviation amount of an ink drop position "10 µm" are "0.1402" and "-32.738", respectively. Therefore, when these values are substituted into the basic expression "y = a * X + b", y = 0.1402 * X - 32.738 is obtained. Then, the pixel value (brightness value) of the selected pixel is substituted for the variable X of the basic expression, which makes it possible to calculate a correction amount for the deviation amount "10 µm" and the pixel value of the selected pixel. For example, when the pixel value of the selected pixel is "233", y = -0.0714, which is approximate to a value -1 of the correction amount information table with a little difference shown in Fig. 23. In Fig. 23, the information of the basic expression and the information of the gradient a and the intercept b for the deviation amount of an ink drop position may be stored as the correction amount information. Therefore, it is possible to reduce the amount of information to be stored, as compared with the correction amount information table of this embodiment. In addition, since the relationship between the pixel value and the correction amount for every deviation amount of an ink drop position is represented by a function, it is possible to easily calculate a correction amount corresponding to an arbitrary pixel value without performing interpolation on pixel values.

Meanwhile, in Fig. 24, functions for calculating the gradient a and the intercept b are created from the information of the gradient a and the intercept b corresponding to each deviation amount of an ink drop position shown in Fig. 23, according to the functional expression of Fig. 23, using the deviation amount of an ink drop position as an input value. Then, information of basic expressions of two functions for calculating the gradient a and the intercept b, information of a gradient a1 and an intercept b1 of the function for calculating the gradient a, information of a gradient a2 and an intercept b2 of the function for calculating the intercept b, and information of a basic expression for calculating the correction amount are stored as correction amount information. That is, information of the coefficients a1, b1, a2, and b2, the basic expression y = a * X + b, a basic expression of the function for calculating the gradient a "a = a1 × X" + b1", and a basic expression of the function for calculating the intercept b "b = a2 * X" + b2" are the correction amount information.

In Fig. 24, since the gradient a1 of the function for calculating the gradient a is "95.691" and the intercept b1 is "-0.3374", the function for calculating the gradient a is "a = 95.691 * X" - 0.3374". For example, if the gradient a for the deviation amount of an ink drop position 10 µm is calculated from this function, the gradient a is -0.3373. Meanwhile, as shown in Fig. 24, since the gradient a2 of the function for calculating the intercept b2 is -0.375 and the intercept b2 is -0.2067, the function for calculating the intercept b is "b = -0.375 * X" -0.2067". If the gradient b for the deviation amount of an ink drop position 10 µm, is calculated from this function, the gradient b is -0.5816. When the calculated values a = -0.3373 and b = -0.5816 are substituted into the basic expression y = a * X + b, the following is calculated: y = -0.3373 * X - 0.5816. That is, the gradient a and the intercept b of a basic expression for calculating a correction amount can be calculated from the deviation amount of an ink drop position, and the correction amount can be calculated from the basis expression. Therefore, information of coefficients for every deviation amount of an ink drop position is not needed, and thus it is possible to further reduce the amount of information, as compared with the example shown in Fig. 23. In addition, it is possible to easily calculate correction amounts corresponding to an arbitrary deviation amount of an ink drop position and an arbitrary pixel value, without performing interpolation.

In the above-described embodiment, the deviation amount of an ink drop position is used as the printing state information of two adjacent nozzles of the printing head 200, but the printing state information is not limited to the deviation amount of an ink drop position. For example, any information may be used as the printing state information as long as it can be directly concerned with the banding phenomenon. For example, information related to the density of two nozzles may be used as the printing state information.

In the above-described embodiment, correction amounts corresponding to two adjacent nozzles (a final value) are added to the pixel values of pixels corresponding to the two nozzles to correct the pixel values, but the invention is not limited thereto. For example, correction may be performed on one of or both pixels corresponding to two nozzles and pixels corresponding to nozzles around the two nozzles, such as nozzles adjacent to the two nozzles. For instance, correction may performed on pixels corresponding to four lines printed by two adjacent nozzles and two nozzles linearly adjacent to the two adjacent nozzles, or it may be performed on pixels corresponding to six lines printed by two adjacent nozzles and four nozzles linearly adjacent to the two adjacent nozzles. That is, correction may be performed on pixels corresponding to a predetermined number of lines that are symmetrically continuous in a vertical or horizontal direction with respect to a line space between lines formed by two target nozzles.

The above-mentioned method of discharging ink droplets having different dot sizes to form a printed matter has been known, and has come into widespread use in printing a high-quality image at high speed. That is, as the size of a dot becomes smaller, the quality of a printed matter is higher. However, when the dot size is reduced, high mechanical accuracy is needed. In addition, it is necessary to discharge a large number of small ink droplets in order to form a solid image with small dots. Thus, it is possible to print a high-quality image at high speed by utilizing a technique for reducing the dot size in a high-resolution image portion and for increasing the dot size in the solid image portion.

As the technique for forming dots having different sizes, a method of using a piezoelectric actuator for the print head may be employed. In this case, it is possible to easily control the amount of ink discharged by adjusting a voltage applied to the piezoelectric actuator.

In general, the sizes of dots formed by the printing head 200 are classified into four patterns, that is, a "large dot", a "middle dot", a "small dot", and "no dot", as shown in Fig. 6. However, the kind of dot sizes is not limited thereto. For example, the sizes of dots may be classified into at least three patterns including "no dot". It is preferable to have many dot patterns.

According to this embodiment of the invention, the pixel values of pixels of image data are corrected on the basis of printing state information and correction amount information, without changing the structure of the existing printing head 200 or printing unit 22. Therefore, it is possible to use the existing printing head 200 or printing unit 20 of an inkjet type, without separately preparing a dedicated printing head 200 and printing unit 22 (printer).

Therefore, when the printing head 200 and the printing unit 22 are separated from the printing apparatus 100 of an embodiment of the invention, the functions thereof may be realized by only a general-purpose information processing apparatus (image processing device), such as a personal computer.

The invention can also be applied, in addition to the ink deflection phenomenon, to a case in which nozzles that discharge ink in the vertical direction (normal direction) are formed so as to deviate from normal positions, causing dots to be formed at positions deviating from target positions as in the ink deflection phenomenon. Further, the invention can cope with the banding phenomenon occurring due to the difference between the transfer speed of a printing sheet in the feeding direction and the transfer speed of the printing head 200. In this case, a sensor for measuring the transfer speed of the printing sheet, and information on the transfer speed may be used in real time to perform image processing. In addition, the invention can cope with the problem of no ink being discharged from a specific nozzle due to the coagulation of ink. The invention can also cope with a variation in printing timing. In this case, a variation in printing position may be fed back to image processing in real time.

The printing apparatus 100 can be applied to a multi-pass inkjet printer as well as a line-head-type inkjet printer. In the line-head-type inkjet printer, a high-quality printed matter having no white stripes and dark stripes can be obtained by one pass even when ink deflection occurs. In the multi-pass inkjet printer, it is possible to reduce the number of reciprocations, which makes it possible to perform high-speed printing, as compared with the related art. For example, the time required to print an image having a desired quality by one printing operation is 1/K time shorter than the time required to print an image having a desired quality by K reciprocating operations.

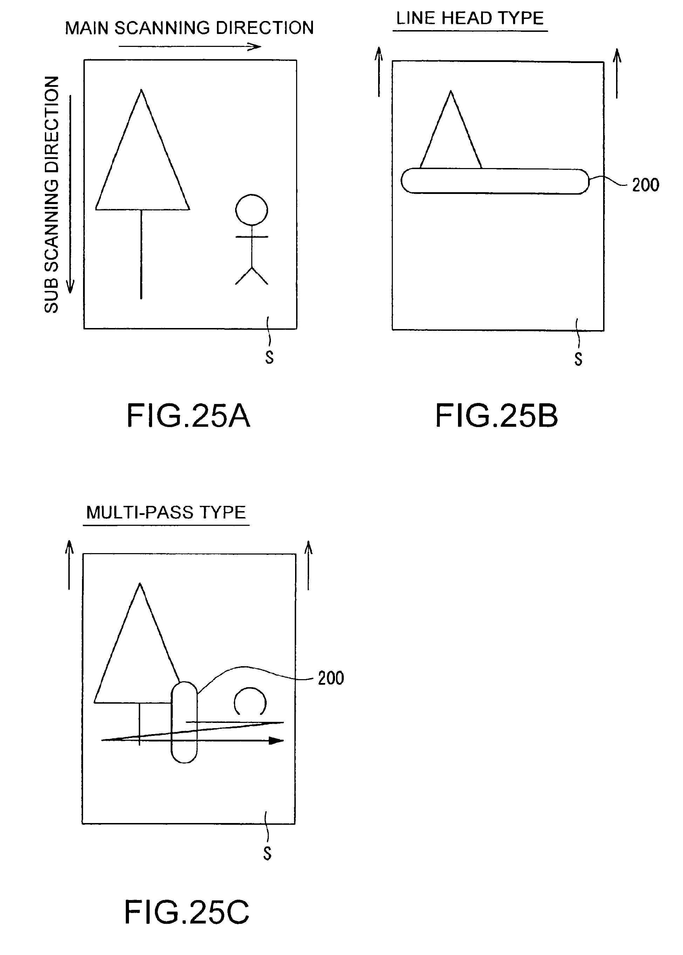

Figs. 25A to 25C illustrate printing methods of the line-head-type inkjet printer and the multi-pass ink jet printer.

As shown in Fig. 25A, when the widthwise direction of a printing sheet S having a rectangular shape is a main scanning direction of image data and the longitudinal direction thereof is a sub scanning direction of the image data, the printing head 200 has a length corresponding to the width of the printing sheet S in the line-head-type inkjet printer, as shown in Fig. 25B. The printing head 200 is fixed, and the printing sheet S moves in the sub scanning direction relative to the printing head 200 to complete printing by a so-called one pass (operation). In addition, as in a flatbed scanner, it is possible to perform printing by fixing the printing sheet S and moving the printing head 200 in the sub scanning direction, or by moving the printing sheet S and the printing head 200 in the opposite direction. In contrast, as shown in Fig. 25C, the multi-pass ink jet printer caries out printing by locating the printing head 200 having a considerably smaller width than that of the printing sheet S in a direction orthogonal to the main scanning direction, and moving the printing sheet S in the sub scanning direction by a predetermined pitch while reciprocating the printing head several times in the main scanning direction. Accordingly, the multi-pass inkjet printer has a longer printing time than the line-head-type inkjet printer. On the other hand, the multi-pass inkjet printer can reduce white stripes especially of the banding phenomenon to some extent since it is possible to repeatedly locate the printing head 200 at an arbitrary position.

In this embodiment, although an inkjet printer ejecting ink in a dot shape to carry out printing has been described above, the invention is not limited thereto. For example, the invention can be applied to other printing apparatuses using a printing head in which printing mechanisms are arranged in a line, for example, a thermal head printer, such as a thermal transfer printer or a thermal printer.

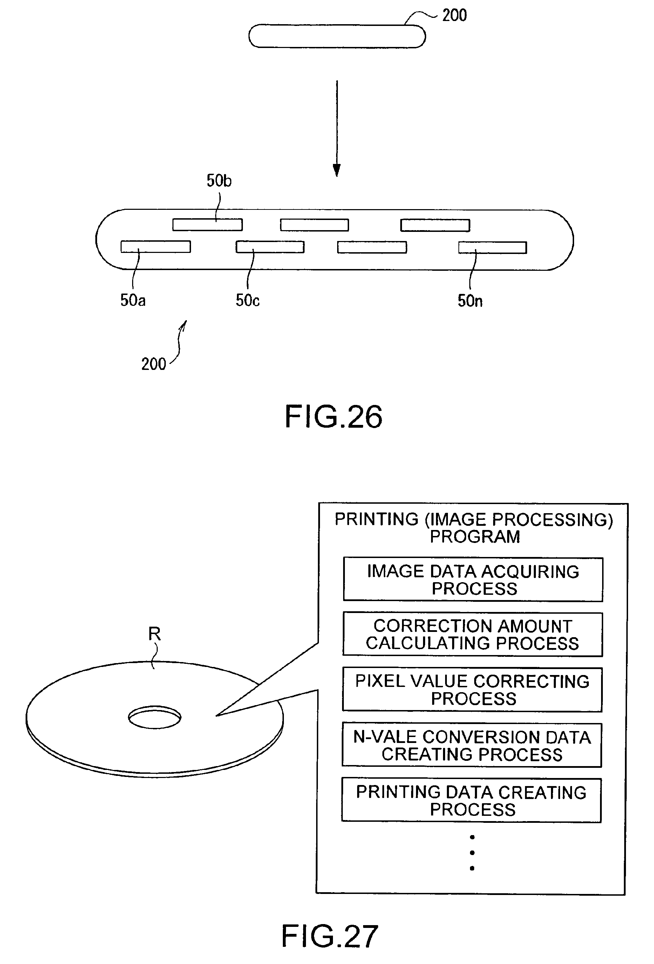

Each of the nozzle modules 50, 52, 54, and 56 corresponding to the colors of the printing head 200 has nozzles N arranged in a line in the longitudinal direction of the printing head 200 in Fig. 3. However, each of the nozzle modules 50, 52, 54, and 56 may include a plurality of short nozzle units 50a, 50b, ..., and 50n, and the nozzle units may be arranged before and after the movement direction of the printing head 200, as shown in Fig. 26. In particular, when the plurality of short nozzle units 50a, 50b, ..., and 50n are arranged in each of the nozzle modules 50, 52, 54, and 56, yield is significantly improved, compared with a case in which each nozzle module is composed of long nozzle units.

In this embodiment, a method of compensating for the amount of ink deflection by controlling density information for banding occurring due to the nozzle causing the ink deflection has been described above. The banding may occur due to a variation in the amount of ink discharged from each nozzle as well as the ink deflection. The amount of ink may be compensated by controlling the density information with regarding the variation in the amount of ink as a density variation. Therefore, since the density information is the same as operational information of the invention, the density information can be suitably used to compensate for the variation in the amount of ink, and it is easy to combine two processes.

Each unit for realizing the above-described printing unit 100 can be implemented on software using a computer system integrated into the existing printing apparatus. A computer program can be stored in a semiconductor ROM beforehand and then installed into a product, it can be distributed to users through a network, such as the Internet, or it can be easily provided to the users via a computer readable recording medium, such as a CD-ROM, a DVD-ROM, or an FD, as shown in Fig. 27.

The foregoing description has been given by way of example only and it will be appreciated by a person skilled in the art that modifications can be made without departing from the scope of the present invention.

## Claims

1. A printing device comprising:
a printing head that has a plurality of nozzles capable of printing dots with different sizes;
a printing state information storage unit that stores printing state information representing a printing state of two nozzles that print two adjacent lines;
an image data acquiring unit that acquires M value image data (M ≥ 3);
a pixel value correcting unit that corrects a pixel value of at least one of pixels corresponding to the two nozzles that are directly concerned with a banding phenomenon caused in the M value image data (M ≥ 3) acquired by the image data acquiring unit and neighboring pixels, on the basis of the printing state information;
an N-value conversion data creating unit that creates N-value conversion data by converting the image data having the pixel value corrected by the pixel value correcting unit into an N value (M > N ≥ 2);
a printing data creating unit that creates printing data to which dots having sizes corresponding to the pixels are allocated on the basis of the N-value conversion data created by N-value conversion data creating unit; and
a printing unit that performs printing by means of the printing head on the basis of the printing data created by the printing data creating unit.

2. The printing device according to claim 1, further comprising:
a correction amount information storage unit that stores correction amount information of the at least one of the pixels corresponding to the two nozzles that are directly concerned with the banding phenomenon and the neighboring pixels, the correction amount information being created on the basis of the printing state information,
wherein the pixel value correction unit corrects the value of the at least one of the pixels corresponding to the two nozzles directly concerned with the banding phenomenon, and the neighboring pixels, on the basis of the correction amount information stored in the correction amount information storage unit.

3. The printing device according to claim 1 or claim 2,
wherein the at least one of the pixels corresponding to the two nozzles that are directly concerned with the banding phenomenon and the neighboring pixels is set to be a pixel corresponding to a predetermined number of lines that are symmetrically continuous with respect to a line space of the two lines printed by the two nozzles directly concerned with the banding phenomenon.

4. The printing device according to any one of the preceding claims,
wherein the printing state information includes information indicating the relationship between an actual printing interval of the two nozzles and an ideal printing interval.

5. The printing device according to any one of the preceding claims,
wherein the printing state information includes information indicating densities of dots formed by the two nozzles.

6. The printing device according to any one of the preceding claims,
wherein the correction amount information comprises a data table that is capable of acquiring the correction amount of the at least one of the pixels and the neighboring pixels from the printing state information corresponding to the two nozzles and the pixel values of the pixels corresponding to the two nozzles.

7. The printing device according to any one of the preceding claims,
wherein the correction amount information comprises information of a function that is capable of acquiring a correction amount of the at least one of the pixels and the neighboring pixels from the printing state information corresponding to the two nozzles and the pixel value of the pixels corresponding to the two nozzles.

8. The printing device according to claim 6 or claim 7,
wherein the pixel values of the pixels are determined on the basis of the pixel values of the corresponding pixels and the pixel values of the neighboring pixels.

9. The printing device according to any one of the preceding claims,
wherein the printing state information represents printing states of a plurality of sets of two nozzles, each set of two nozzles being composed of a continuous series of two nozzles, and
the pixel value correcting unit is configured such that, for two sets of nozzles including a common nozzle among the respective two nozzles directly concerned with the banding phenomenon, at least one of a pixel corresponding to the common nozzle and the neighboring pixels is corrected based on the correction amount corresponding to the two sets of nozzles.

10. The printing device according to any one of the preceding claims,
wherein the N-value conversion data creating unit converts the image data having a pixel value corrected by the pixel value correcting unit into an N-value by using an error diffusion method or a dithering method.

11. The printing device according to any one of the preceding claims,
wherein the printing head has the nozzles that are continuously arranged in a wider range than the printing medium loading area to print an image by only one scanning.

12. The printing device according to any one of the preceding claims,
wherein the printing head reciprocates in a direction perpendicular to a feeding direction of the printing medium to perform printing.

13. A printing program that allows a computer to function as:
an image data acquiring unit that acquires M value image data (M ≥ 3);
a pixel value correcting unit that corrects a pixel value of at least one of pixels corresponding to two nozzles that are directly concerned with a banding phenomenon caused in the M value image data (M ≥ 3) acquired by the image data acquiring unit and neighboring pixels, on the basis of printing state information indicating the printing state of two nozzles printing two adjacent lines among a plurality of nozzles included in a printing head, the plurality of nozzles being capable of printing dots having different sizes;
an N-value conversion data creating unit that creates N-value conversion data by converting the image data having the pixel value corrected by the pixel value correcting unit into an N value (M > N ≥ 2);
a printing data creating unit that creates printing data to which dots having sizes corresponding to the pixels are allocated on the basis of the N-value conversion data created by the N-value conversion data creating unit; and
a printing unit that performs printing by means of the printing head on the basis of the printing data created by the printing data creating unit.

14. A computer readable recording medium on which the printing program according to claim 13 is recorded.

15. A printing method comprising:
acquiring M value image data (M ≥ 3);
correcting at least one of pixel values of pixels corresponding to two nozzles directly concerned with a banding phenomenon and pixel values of neighboring pixels in the M-value image data (M ≥ 3) acquired in the acquiring of the image data, on the basis of printing state information indicating the printing state of two nozzles printing two adjacent lines among a plurality of nozzles included in a printing head, the plurality of nozzles being capable of printing dots having different sizes;
creating N-value conversion data by converting the image data having the pixel values corrected in the correcting of the pixel values into an N value (M > N ≥ 2);
creating printing data to which dots having sizes corresponding to each pixel are allocated, on the basis of the N-value conversion data created in the creating of the N-value conversion data; and
printing by using the printing head on the basis of the printing data created in the creating of the printing data.

16. An image processing device comprising:
a printing state information storage unit that stores printing state information indicating the printing state of two nozzles printing two adjacent lines among a plurality of nozzles included in a printing head, the plurality of nozzles being capable of printing dots having different sizes;
an image data acquiring unit that acquires M value image data (M ≥ 3);
a pixel value correcting unit that corrects a pixel value of at least one of pixels corresponding to the two nozzles that are directly concerned with a banding phenomenon in the M value image data (M ≥ 3) and neighboring pixels acquired by the image data acquiring unit, on the basis of the printing state information;
an N-value conversion data creating unit that creates N-value conversion data by converting the image data having the pixel value corrected by the pixel value correcting unit into an N value (M > N ≥ 2); and
a printing data creating unit that creates printing data to which dots having sizes corresponding to the pixels are allocated on the basis of the N-value conversion data created by the N-value conversion data creating unit.

17. An image processing program that allows a computer to function as:
an image data acquiring unit that acquires M-value image data (M ≥ 3);
a pixel value correcting unit that corrects at least one of pixel values of pixels corresponding to two nozzles directly concerned with a banding phenomenon in the M-value image data (M ≥ 3) acquired by the image data acquiring unit and pixel values of neighboring pixels, on the basis of printing state information indicating the printing state of two nozzles printing two adjacent lines among a plurality of nozzles included in a printing head, the plurality of nozzles being capable of printing dots having different sizes;
an N-value conversion data creating unit that creates N-value conversion data by converting the image data having the pixel values corrected by the pixel value correcting unit into an N value (M > N ≥ 2); and
a printing data creating unit that creates printing data to which dots having sizes corresponding to each pixel are allocated, on the basis of the N-value conversion data created by the N-value conversion data creating unit.

18. A computer readable recording medium on which the image processing program according to claim 17 is recorded.

19. An image processing method comprising:
acquiring M value image data (M ≥ 3);
correcting a pixel value of at least one of pixels corresponding to two nozzles that are directly concerned with a banding phenomenon and neighboring pixels in the M value image data (M ≥ 3) acquired in the acquiring of the image data, on the basis of printing state information indicating the printing state of two nozzles printing two adjacent lines among a plurality of nozzles included in a printing head, the plurality of nozzles being capable of printing dots having different sizes;
creating N-value conversion data by converting the image data having the pixel value corrected in the correcting of the pixel value into an N value (M > N ≥ 2); and
creating printing data to which dots having sizes corresponding to the pixels are allocated on the basis of the N-value conversion data created in the creating of N-value conversion data.
